# EUROPÄISCHE PATENTSCHRIFT

(11) **EP 2 720 794 B1**
(45) Veröffentlichungstag und Bekanntmachung des Hinweises auf die Patenterteilung: **14.11.2018**
(21) Anmeldenummer: 12729870.1
(22) Anmeldetag: 15.06.2012
(51) Int. Cl.: B01J 37/00, B01J 21/06, B01J 23/22, B01J 23/00, B01J 23/10, B01J 21/12, B01J 23/889, B01J 23/31

(54) **PORÖSE MATERIALIEN AUF BASIS VON METALLISCHEN MISCHOXIDEN SOWIE DEREN HERSTELLUNG UND VERWENDUNG**
MIXED METAL OXIDE-BASED POROUS MATERIALS AND THE PRODUCTION AND USE THEREOF
MATÉRIAUX POREUX À BASE D'OXYDES MÉTALLIQUES MIXTES AINSI QUE LEUR PRODUCTION ET LEUR UTILISATION

(30) Priorität: 17.06.2011 DE 102011105196
(43) Veröffentlichungstag der Anmeldung: 23.04.2014
(73) Patentinhaber: Blücher GmbH, 40699 Erkrath (DE)
(72) Erfinder: GLÄSER, Roger, 07749 Jena (DE); LUTECKI, Michael, 04103 Leipzig (DE); WITH, Patrick, 04425 Taucha (DE); HEINRICH, Astrid, 04103 Leipzig (DE); FICHTNER, Sven, 14727 Premnitz (DE); BÖHRINGER, Bertram, 42115 Wuppertal (DE)
(74) Vertreter: Strehlke, Ingo Kurt
(86) Internationale Anmeldenummer: PCT/EP2012/002543
(87) Internationale Veröffentlichungsnummer: WO 2012/171656

(56) Entgegenhaltungen:
- EP-A2- 1 063 002
- DE-A1- 10 226 131
- ANGANG DONG ET AL: "General Synthesis of Mesoporous Spheres of Metal Oxides and Phosphates", JOURNAL OF THE AMERICAN CHEMICAL SOCIETY, Bd. 125, Nr. 17, 1. April 2003 (2003-04-01), Seiten 4976-4977, XP55036674, ISSN: 0002-7863, DOI: 10.1021/ja029964b
- MARK CROCKER ET AL: "Preparation and characterization of cerium oxide templated from activated carbon", JOURNAL OF MATERIALS SCIENCE, KLUWER ACADEMIC PUBLISHERS, BO, Bd. 42, Nr. 10, 20. Januar 2007 (2007-01-20), Seiten 3454-3464, XP019503452, ISSN: 1573-4803, DOI: 10.1007/S10853-006-0829-6
- FERDI SCHÜTH ET AL: "Endo- and Exotemplating to Create High-Surface-Area Inorganic Materials", ANGEWANDTE CHEMIE INTERNATIONAL EDITION, Bd. 42, Nr. 31, 11. August 2003 (2003-08-11), Seiten 3604-3622, XP55036678, ISSN: 1433-7851, DOI: 10.1002/anie.200300593
- SCHATTKA J H ET AL: "PHOTOCATALYTIC ACTIVITIES OF POROUS TITANIA AND TITANIA/ZIRCONIA STRUCTURES FORMED BY USING A POLYMER GEL TEMPLATING TECHNIQUE", CHEMISTRY OF MATERIALS, AMERICAN CHEMICAL SOCIETY, WASHINGTON, US, Bd. 14, Nr. 12, 1. Dezember 2002 (2002-12-01), Seiten 5103-5108, XP001501442, ISSN: 0897-4756, DOI: 10.1021/CM021238K
- P. WITH ET AL: "Zirconia with Defined Particle Morphology and Hierarchically Structured Pore System Synthesized via Combined Exo- and Endotemplating", CHEMICAL ENGINEERING & TECHNOLOGY, Bd. 33, Nr. 10, 1. Oktober 2010 (2010-10-01), Seiten 1712-1716, XP55037118, ISSN: 0930-7516, DOI: 10.1002/ceat.201000196

## Beschreibung

Die vorliegende Erfindung betrifft das technische Gebiet poröser Materialien, insbesondere selbsttragender poröser Materialien, auf Basis von Metallmischoxiden, sowie deren Herstellung und Verwendung.

Insbesondere betrifft die vorliegende Erfindung ein Verfahren zur Herstellung von partikulären porösen Materialien auf Basis von metallischen Mischoxiden mindestens zweier voneinander verschiedener Metalle mittels Templatverfahren (Templatsynthese) sowie die auf diese Weise erhältlichen partikulären porösen Materialien und deren Verwendung, insbesondere für den Bereich der Katalyse, der Behandlung von Abgasen, die Anwendung in Gassensoren oder die Anwendung in Brennstoffzellen.

Die Anwendung von metalloxidischen Systemen ist äußerst vielfältig: Metalloxide finden insbesondere Verwendung als Katalysatoren oder Katalysatorträger für unterschiedlichste Anwendungen, aber auch in anderen Bereichen, wie beispielsweise in der Brennstoffzellentechnologie, in Gassensoren, bei der katalytischen Abgasbehandlung oder dergleichen.

In vielen Bereichen sind die Anforderungen derart komplex, dass Metalloxide einzelner Elemente bzw. Metalle die dort gestellten Aufgaben nicht erfüllen können, so dass ein Bedarf an Metalloxiden verschiedener unterschiedlicher Metalle bzw. an metallischen Mischoxiden auf Basis unterschiedlicher Metalle besteht. Daher hat es nicht an Versuchen gefehlt, Materialien auf Basis von metallischen Mischoxiden voneinander verschiedener Metalle bereitzustellen.

Eine aus dem Stand der Technik bekannte Methode besteht darin, die betreffenden Metallmischoxide bzw. die Mischung verschiedener Metalloxide auf einem inerten Träger (z. B. Aluminiumoxid, Siliziumoxid, Aktivkohle etc.) bereitzustellen, was insbesondere durch Imprägnieren des betreffenden Trägers mit einer entsprechenden Salzlösung oder -dispersion der betreffenden Metallionen erfolgen kann, gefolgt von einer nachfolgenden Oxidation der Metallsalze zu den betreffenden Metalloxiden. Nachteil dieser Methode ist allerdings, dass die betreffenden Metalloxide nicht selbsttragend ausgebildet sind, sondern nur auf einem entsprechenden Träger vorliegen, so dass ein nicht unbeachtlicher Teil der spezifischen Oberfläche verlorengeht. Auch ist die katalytische Aktivität solcher Systeme nicht immer optimal, da die Kontaktflächen bzw. Oberflächen zu den betreffenden Metalloxiden nicht unmittelbar frei zugänglich sind.

Darüber hinaus existieren im Stand der Technik Fällungsmethoden, bei denen die betreffenden Metalloxide aus Lösungen von entsprechenden Präkursorsalzen der Metalle ausgefällt werden. Gegebenenfalls kann sich dann nach Abtrennung der ausgefällten Partikel eine thermische Behandlung anschließen. Bei dieser Methode werden jedoch meist nur amorphe Pulver mit geringer spezifischer Oberfläche und geringem spezifischen Porenvolumen erhalten.

Darüber hinaus wurde im Stand der Technik auch versucht, derartige Mischungen metallischer Oxide bzw. metallische Mischoxide mittels Templatverfahren herzustellen, wobei die erhaltenen Produkte jedoch nicht immer ausreichend hohe spezifische Oberflächen und ausreichend große spezifische Porenvolumina aufweisen. Auch ist die mechanische Stabilität der erhaltenen Produkte nicht immer ausreichend. Auch der erreichte Kristallinitätsgrad entspricht nicht immer den gewünschten Anforderungen.

Die wissenschaftliche Publikation gemäß Dong et al, J. Am. Chem. Soc., 2003, 125, Seiten 4976 bis 4977 betrifft ein Verfahren zur Herstellung von mesoporösen Metalloxiden und Phosphaten unter Verwendung von kugelförmiger Kohle.

Weiterhin betrifft die wissenschaftliche Publikation gemäß Crocker M. et al., J. Mater. Sei., 2007, 42, Seiten 3454 bis 3464 die Herstellung von Mischoxiden durch Imprägnierung einer Aktivkohle mit einer wässrigen Lösung der entsprechenden Salze und anschließender Kalzinierung zur Entfernung des Matrixmaterials in Form von Aktivkohle.

Darüber hinaus betrifft die Entgegenhaltung DE 102 26 131 A1 Materialien, welche während ihrer Herstellung auf eine Temperatur aufgeheizt werden, die über der späteren Einsatztemperatur liegt.

Zudem betrifft die wissenschaftliche Publikation gemäß Schüth F., Angw. Chem. Int. Ed., 2003, 42, Seiten 3604 bis 3622 einen Review-Artikel über die Verwendung von Endo- und Exotemplaten zur Erzeugung von anorganischen Materialien, welche die Form des Templats aufweisen sollen.

Die wissenschaftliche Publikation gemäß Schattka J. H. et al., Chem. Mater., 2002, 14, Seiten 5103 bis 5108 betrifft poröse Mischoxidstrukturen, welche unter Verwendung eines Polymergels als Matrixmaterial hergestellt werden sollen.

Weiterhin betrifft die Druckschrift EP 1 063 002 A2 einen Katalysator zur Entfernung von Organohalogenverbindunden auf Basis von Titandioxid und Vanadiumoxid, welcher eine bimodale Porenverteilung aufweist.

Schließlich betrifft die wissenschaftliche Publikation gemäß With P. et al., Chem. Eng. Technol., 2010, 33, Seiten 1712 bis 1716 die Herstellung von Zirkoniumpartikeln mit einer kombinierten Exo- und Endotemplatsythese unter Verwendung von Aktivkohle als Exotemplat.

Es ist daher eine Aufgabe der vorliegenden Erfindung, poröse Materialien auf Basis von metallischen Mischoxiden und ein entsprechendes Herstellungsverfahren bereitzustellen, wobei die zuvor geschilderten Nachteile des Standes der Technik zumindest weitgehend vermieden oder aber wenigstens abgeschwächt werden sollen.

Insbesondere sollen im Rahmen der vorliegenden Erfindung poröse Materialien auf Basis von metallischen Mischoxiden, insbesondere Mischoxiden mindestens zweier voneinander verschiedener Metalle, bereitgestellt werden, welche über eine ausreichend hohe spezifische Oberfläche (BET) und ein ausreichend großes spezifisches Porenvolumen bei gleichzeitig guter mechanischer Stabilität verfügen. Darüber hinaus sollen die betreffenden porösen Materialien selbsttragend ausgebildet sein, d. h. ohne zusätzliches Trägersystem auskommen. Weiterhin sollen kontrollierbare Partikelmorphologien und/oder kontrollierbare, insbesondere homogene Partikeldurchmesserverteilungen erreichbar sein.

Wie die Anmelderinnen nun überraschend herausgefunden haben, gelingt es in nicht erwarteter Weise, derartige poröse Materialien auf Basis metallischer Mischoxide mit den vorgenannten Eigenschaften mittels Templatverfahren (d. h. Templatsynthese) bereitzustellen, wobei im Rahmen der vorliegenden Erfindung als Templat eine partikuläre Aktivkohle zum Einsatz kommt.

Zur Lösung der zuvor geschilderten Aufgabe schlägt die vorliegende Erfindung somit - gemäß einem **ersten** Aspekt der vorliegenden Erfindung - ein Verfahren zur Herstellung von partikulären porösen Materialien auf Basis von metallischen Mischoxiden mindestens zweier voneinander verschiedener Metalle mittels Templatverfahren (Templatsynthese) gemäß Anspruch 1 vor. Weitere, insbesondere vorteilhafte Ausgestaltungen des erfindungsgemäßen Verfahrens sind Gegenstand der diesbezüglichen Verfahrensunteransprüche.

Weiterer Gegenstand der vorliegenden Erfindung sind - gemäß einem **zweiten** Aspekt der vorliegenden Erfindung - die nach dem erfindungsgemäßen Verfahren erhältlichen partikulären porösen Materialien auf Basis von metallischen Mischoxiden mindestens zweier voneinander verschiedener Metalle gemäß Anspruch 9. Weitere, insbesondere vorteilhafte Ausgestaltungen der erfindungsgemäßen porösen Materialien sind Gegenstand der diesbezüglichen Unteransprüche.

Schließlich ist weiterer Gegenstand der vorliegenden Erfindung - gemäß einem **dritten** Aspekt der vorliegenden Erfindung - die erfindungsgemäße Verwendung der partikulären porösen Materialien nach der vorliegenden Erfindung, wie sie in den entsprechenden Verwendungsansprüchen beschrieben ist.

Es versteht sich von selbst, dass bei der nachfolgenden Beschreibung der vorliegenden Erfindung solche Ausgestaltungen, Ausführungsformen, Vorteile, Beispiele oder dergleichen, welche nachfolgend - zu Zwecken der Vermeidung von unnötigen Wiederholungen - nur zu einem einzelnen Erfindungsaspekt ausgeführt werden, selbstverständlich auch in Bezug auf die übrigen Erfindungsaspekte entsprechend gelten, ohne dass es einer ausdrücklichen Erwähnung bedarf.

Weiterhin versteht es sich von selbst, dass bei nachfolgenden Angaben von Werten, Zahlen und Bereichen die diesbezüglichen Werte-, Zahlen- und Bereichsangaben nicht beschränkend zu verstehen sind; es versteht sich für den Fachmann von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass alle im Folgenden genannten Werte- bzw. Parameterangaben oder dergleichen grundsätzlich mit genormten bzw. standardisierten oder explizit angegebenen Bestimmungsverfahren oder aber andernfalls mit dem Fachmann auf diesem Gebiet an sich geläufigen Bestimmungsmethoden ermittelt bzw. bestimmt werden können.

Im Übrigen gilt, dass bei allen nachstehend aufgeführten relativen bzw. prozentualen, insbesondere gewichtsbezogenen Mengenangaben zu beachten ist, dass diese Angaben im Rahmen der vorliegenden Erfindung vom Fachmann derart auszuwählen bzw. zu kombinieren sind, dass in der Summe - gegebenenfalls unter Einbeziehung weiterer Komponenten bzw. Inhaltsstoffe, insbesondere wie nachfolgend definiert - stets 100 % bzw. 100 Gew.-% resultieren. Dies versteht sich für den Fachmann aber von selbst.

Dies vorausgeschickt, wird im Folgenden die vorliegende Erfindung näher beschrieben.

Gemäß einem **ersten** Aspekt der vorliegenden Erfindung betrifft die vorliegende Erfindung somit ein Verfahren zur Herstellung von partikulären porösen Materialien auf Basis von metallischen Mischoxiden mindestens zweier voneinander verschiedener Metalle mittels Templatverfahren (Templatsynthese),
(a) wobei zunächst in einem ersten Verfahrensschritt Nanopartikel von Metalloxiden mindestens zweier voneinander verschiedener Metalle in die Poren eines porösen dreidimensionalen Matrixmaterials ("Exotemplat") eingebracht werden, wobei die Nanopartikel Teilchengrößen im Bereich von 0,1 nm bis 2.000 nm aufweisen und wobei als poröses dreidimensionales Matrixmaterial partikelförmige, insbesondere kornförmige, vorzugsweise kugelförmige Aktivkohle eingesetzt wird, wobei das Matrixmaterial an seiner Oberfläche modifiziert wird, wobei die Oberflächenmodifizierung durch oxidative oder reduktive Behandlung des Matrixmaterials erfolgt; und
(b) wobei nachfolgend in einem zweiten Verfahrensschritt das mit den Nanopartikeln beladene Matrixmaterial einer thermischen Behandlung zu Zwecken einer zumindest partiellen, vorzugsweise zu Zwecken einer zumindest im Wesentlichen vollständigen Entfernung des Matrixmaterials unterzogen wird.

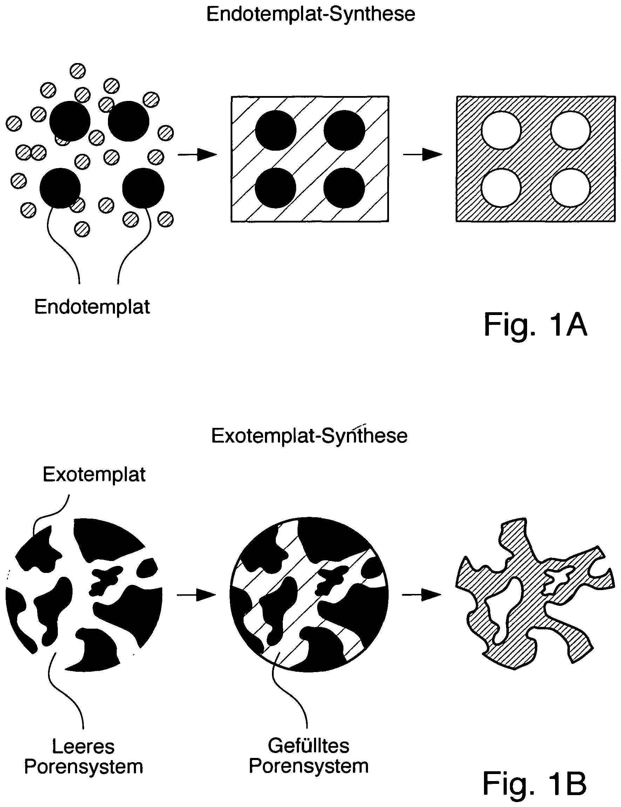

Wie sich aus der Beschreibung des erfindungsgemäßen Verfahrens ergibt, erfolgt die erfindungsgemäße Herstellung der partikulären porösen Materialien mittels eines sogenannten Templatverfahrens (Templatsynthese). Bei einer sogenannten Templatsynthese organisiert ein chemisches Templat eine Ansammlung von Atomen, Ionen bzw. Molekülen mit Hinblick auf einen oder mehrere geometrische Orte, um eine bestimmte Vernetzung dieser Atome, Ionen oder Moleküle zu erreichen. Ganz allgemein ausgedrückt, dient das Templat also der Vororientierung der zu verknüpfenden Komponenten. In Abhängigkeit davon, ob die zu verknüpfenden Komponenten in das Templat eingebracht werden oder aber die Template von den zu verknüpfenden Komponenten umgeben werden, unterscheidet man zwischen sogenannten Exotemplaten einerseits und Endotemplaten andererseits. Im Rahmen der Templatsynthese werden im Idealfall die Abmessungen und Geometrie des Templats auf das resultierende Produkt im Sinne eines Negativabdrucks übertragen; in der Praxis ergeben sich jedoch hiervon Abweichungen, worauf nachfolgend noch eingegangen wird. Das Grundprinzip der Templatsynthese ist in der Figurendarstellung gemäß Fig. 1A und 1B veranschaulicht, worauf nachfolgend noch im Detail eingegangen wird.

Im Rahmen des erfindungsgemäßen Verfahrens kommt als poröses dreidimensionales Matrixmaterial (d. h. also als Exotemplat) eine partikuläre, insbesondere kornförmige, vorzugsweise kugelförmige Aktivkohle mit definierter Partikelmorphologie, insbesondere definierter Partikelgröße, zum Einsatz.

Die Verwendung speziell von Aktivkohle als Exotemplat ist mit einer Vielzahl von Vorteilen verbunden: Die erfindungsgemäß als Exotemplat eingesetzte Aktivkohle ist ohne Weiteres nach Verfahren des Standes der Technik herstellbar und auch im großen Maßstab kommerziell erhältlich; handelsübliche Aktivkohle, wie sie erfindungsgemäß als Exotemplat zum Einsatz kommt, wird beispielsweise von der Blücher GmbH, Erkrath, Deutschland, sowie der Adsor-Tech GmbH, Premnitz, Deutschland, vertrieben.

Aktivkohle hat weiterhin den Vorteil, dass im Verfahrensschritt der thermischen Behandlung eine vollständige Entfernung, insbesondere über Verbrennung bzw. Pyrolyse, möglich ist, so dass letztendlich selbsttragende poröse Materialien in partikulärer Form erhalten werden. Des Weiteren besitzt Aktivkohle den Vorteil, dass neben der Teilchengröße auch das innere Porensystem einstellbar bzw. steuerbar ist und somit für die betreffende Anwendung maßgeschneidert werden kann; auf diese Weise kann auch das Porensystem der resultierenden Metallmischoxide ohne Weiteres eingestellt bzw. gesteuert und somit maßgeschneidert werden, da die als Exotemplat eingesetzte Aktivkohle sozusagen als Schablone für die resultierenden Endprodukte dient. Weiterhin hat die eingesetzte kornförmige, insbesondere kugelförmige Aktivkohle den Vorteil, dass sie mechanisch stark belastbar ist und darüber hinaus die kugelförmige Morphologie auch auf die resultierenden Endprodukte überträgt.

Durch die Synthese bzw. Herstellung der erfindungsgemäßen partikulären porösen Materialien in den räumlich begrenzten Poren des Aktivkohle-Exotemplats werden zudem kleine Kristallite der Metalloxide stabilisiert; auf diese Weise werden insbesondere eine Sinterung oder unerwünschte Phasenumwandlungen, die bei einer Kalzinierung nach anderen Syntheserouten (beispielsweise mit Endotemplaten) auftreten können und zum Verlust einer hohen spezifischen Oberfläche führen, in effizienter Weise verhindert. Darüber hinaus können die Abmessungen und Geometrie des Exotemplat-Porensystems auf das resultierende Endprodukt im Sinne eines Negativabdrucks übertragen werden. Da das aktivkohlebasierte Exotemplat darüber hinaus eine definierte Partikelmorphologie, insbesondere eine definierte Teilchengröße, aufweist, bleibt diese auch nach Entfernen des aktivkohlebasierten Exotemplats erhalten.

Im Rahmen der vorliegenden Erfindung werden folglich partikuläre poröse Materialien auf Basis von metallischen Mischoxiden, insbesondere poröse Partikel von Mischoxiden mindestens zweier voneinander verschiedener Metalle, erhalten, welche über hohe spezifische Oberflächen und große spezifische Porenvolumina verfügen. Darüber hinaus sind die erhaltenden partikulären porösen Materialien mechanisch stabil und selbsttragend ausgebildet (d. h. sie kommen ohne zusätzlichen Träger aus), was insbesondere für katalytische Anwendungen von großem Vorteil ist. Weiterhin weisen die nach den erfindungsgemäßen Verfahren erhältlichen partikulären porösen Materialien im Allgemeinen einen hohen Kristallinitätsgrad auf, was zum einen zu ihrer mechanischen Stabilität beiträgt und zum anderen ihre katalytische Leistungsfähigkeit signifikant steigert.

Das erfindungsgemäße Verfahren ermöglicht somit die Herstellung von selbsttragenden porösen Materialien auf Basis von metallischen Mischoxiden mindestens zweier voneinander verschiedener Metalle in partikulärer Form, welche insbesondere für katalytische Anwendungen, aber auch für andere Anwendungen (z. B. Gassensorik, Brennstoffzellentechnologie, Abgasbehandlung etc.) geeignet sind.

Der Begriff der metallischen Mischoxide, wie er im Rahmen der vorliegenden Erfindung verwendet wird, ist sehr weit zu verstehen und umfasst insbesondere sowohl reine Mischungen verschiedener Metalloxide als auch echte Mischoxide im eigentlichen Sinne, bei denen die verschiedenen Metalle bzw. Metallionen in einer einheitlichen Struktur, insbesondere einem gemeinsamen Gitter, vorliegen.

Im Rahmen der vorliegenden Erfindung hat es sich als besonders vorteilhaft erwiesen, wenn die Nanopartikel in Form einer Dispersion oder einer kolloidalen Lösung, insbesondere in Form eines Sols, eingesetzt werden. Mit anderen Worten werden im Rahmen der vorliegenden Erfindung die Nanopartikel in Form einer Dispersion oder einer kolloidalen Lösung, insbesondere eines Sols, in die Poren des Matrixmaterials (d. h. Aktivkohle) eingebracht. Dabei kann die eingesetzte Dispersion oder kolloidale Lösung der Nanopartikel grundsätzlich wässrig basiert oder aber organisch basiert, vorzugsweise wässrig basiert, ausgebildet sein.

Diese Ausführungsform der vorliegenden Erfindung ist mit einer Vielzahl von Vorteilen verbunden: Zum einen können auf diese Weise höhere Konzentrationen an Metallmischoxiden im Exotemplat erhalten werden - im Vergleich zu der Einbringung von Präkursorsalzen der Metalle mit nachfolgender Oxidation. Dies führt zu mechanisch stabileren Endprodukten mit einem höheren Kristallitätsgrad und größeren spezifischen Oberflächen und Porenvolumina. Zum anderen führt dies zu einer verbesserten Stabilisierung der Kristallite im Inneren des Exotemplats, da die Nanopartikel Kristallisationskeime bilden, welche unerwünschte Phasenumwandlungen in effizienter Weise verhindern. Das räumlich begrenzte Porensystem des Aktivkohle-Exotemplats führt außerdem zu einer weitergehenden Stabilisierung der Metalloxidkristallite und verhindert zudem ein unerwünschtes Sintern sowie unerwünschte Phasenumwandlungen.

In erfindungsgemäß besonders bevorzugter Weise wird im Rahmen der vorliegenden Erfindung ein Sol, d. h. eine kolloidale Lösung, der betreffenden Nanopartikel hergestellt bzw. eingesetzt und in das Porensystem des Exotemplats eingebracht.

Im Allgemeinen werden die Nanopartikel, insbesondere die Dispersionen oder kolloidalen Lösungen, vorzugsweise Sole, der betreffenden Nanopartikel, mittels Fällung (Präzipitation) erhalten, wobei im Allgemeinen insbesondere von Lösungen oder Dispersionen von Salzen oder anderen Verbindungen (z. B. Alkoxiden) der betreffenden Metalle mit nachfolgender Oxidation ausgegangen werden kann. Dies ist dem Fachmann als solches geläufig und bekannt. Üblicherweise erfolgt die Herstellung der Nanopartikel, insbesondere der Dispersionen und kolloidalen Lösungen der Nanopartikel, *in situ.*

Im Allgemeinen schließt sich dem Verfahrensschritt der Einbringung der die Nanopartikel enthaltenden Dispersion oder kolloidalen Lösung, insbesondere des Sols, in die Poren des Matrixmaterials (Exotemplats) - noch vor Durchführung der thermischen Behandlung gemäß Verfahrensschritt (b) - zunächst ein Verfahrensschritt der Trocknung an. Dieser Trocknungsschritt dient insbesondere der Entfernung des flüssigen Mediums der die Nanopartikel enthaltenden Dispersion oder kolloidalen Lösung, insbesondere des Sols.

Um eine Einbringung der Nanopartikel in das Porensystem des Exotemplats zu ermöglichen, sind die Teilchengrößen der Nanopartikel kleiner als die Durchmesser der Poren des Matrixmaterials ausgebildet. Besonders bevorzugt ist es, wenn das Verhältnis der Durchmesser der Poren des Matrixmaterials zu den Teilchengrößen der Nanopartikel > 1 : 1 (z. B. mindestens 1,05 : 1), insbesondere mindestens 1,25 : 1, vorzugsweise mindestens 1,5 : 1, bevorzugt mindestens 1,75 : 1, besonders bevorzugt mindestens 2, ganz besonders bevorzugt mindestens 5, noch mehr bevorzugt mindestens 10, noch weiter bevorzugt mindestens 20, noch weiter bevorzugt mindestens 50, beträgt. Erfindungsgemäß bevorzugt ist es, wenn mindestens 50 %, insbesondere mindestens 70 %, vorzugsweise mindestens 90 %, besonders bevorzugt mindestens 99 % und mehr, ganz besonders bevorzugt 100 %, der eingesetzten Nanopartikel diese Voraussetzung erfüllt; sofern ein wie zuvor spezifizierter Anteil der Nanopartikel diese Voraussetzung nicht erfüllt, ist dies dennoch nicht abträglich, da dieser Teil der Nanopartikel dann an das Matrixmaterial anlagern und nach thermischer Behandlung des Matrixmaterials in Verfahrensschritt (b) eine äußere Hüllschicht im Endprodukt ausbilden kann (was zu einer zusätzlichen Stabilisierung der Endprodukte führt).

Erfindungsgemäß weisen die einzubringenden Nanopartikel der betreffenden Metalloxide Teilchengrößen im Bereich von 0,1 nm bis 2.000 nm, insbesondere 0,5 nm bis 1.000 nm, vorzugsweise 0,75 nm bis 750 nm, besonders bevorzugt 1 nm bis 500 nm, ganz besonders bevorzugt 1 nm bis 250 nm, noch mehr bevorzugt 2 bis 100 nm, auf. Insbesondere weisen die betreffenden Nanopartikel mittlere Teilchengrößen (D50) im Bereich von 0,1 nm bis 500 nm, insbesondere 0,2 nm bis 100 nm, vorzugsweise 0,5 nm bis 50 nm, besonders bevorzugt 1 nm bis 25 nm, auf.

Gemäß einer besonderen Ausführungsform der vorliegenden Erfindung erfolgt das Einbringen der Nanopartikel in die Poren des Matrixmaterials in Gegenwart von und/oder zusammen mit mindestens einem Endotemplat, insbesondere einem strukturdirigierenden und/oder porogenen (porenbildenden) Agens.

Das Endotemplat sollte bei dieser Ausführungsform derart ausgewählt sein, dass es bei der thermischen Behandlung gemäß Verfahrensschritt (b) zumindest partiell, vorzugsweise zumindest im Wesentlichen vollständig, entfernt werden kann.

Diese Ausführungsform hat den Vorteil, dass - neben dem Porensystem, welches als Negativabdruck des Exotemplats auf das Endprodukt übertragen wird - ein zusätzliches, sozusagen intrinsisches zweites Porensystem mit einer vom ersten Porensystem verschiedenen Durchmesserverteilung erzeugt wird, wobei im Allgemeinen das durch das Endotemplat erzeugte Porensystem einen kleineren Porendurchmesser als das durch das Exotemplat vorgegebene Porensystem aufweist. Bei dieser Ausführungsform resultiert also ein sogenanntes hierarchisch strukturiertes Porensystem, d. h. ein Porensystem mit bimodaler oder multimodaler Porengrößenverteilung. Zudem werden auf diese Weise die spezifischen Oberflächen (BET) und spezifischen Porenvolumina vergrößert, so dass insbesondere für katalytische, aber auch für andere Anwendungen die Leistungseigenschaften der erfindungsgemäßen partikulären porösen Materialien weiter gesteigert werden können.

Was das eingesetzte Endotemplat bei dieser besonderen Ausführungsform anbelangt, so kann dieses ausgewählt sein aus der Gruppe von organischen Polymeren und Copolymeren, insbesondere Blockcopolymeren (z. B. Blockcopolymere aus Ethylenoxid und Propylenoxid = Poloxamere, z. B. Pluronic® von der BASF, Ludwigshafen, Deutschland), organischen Tensiden, mizellenbildenden Verbindungen und Ammoniumsalzen, insbesondere quarternären oder diquarternären Ammoniumsalzen, sowie deren Mischungen und Kombinationen. Die vorgenannten Verbindungen lassen sich im Rahmen der thermischen Behandlung gemäß Verfahrensschritt (b) ohne Weiteres, insbesondere rückstandsfrei, entfernen, so dass ein zusätzliches inneres Porensystem generiert wird.

Bei der besonderen Ausführungsform der vorliegenden Erfindung, welche ein Endotemplat verwendet, kann insbesondere derart vorgegangen werden, dass das Endotemplat Bestandteil einer die Nanopartikel enthaltenden Dispersion oder kolloidalen Lösung, insbesondere eines Sols, ist. Mit anderen Worten kann das Endotemplat in eine die Nanopartikel enthaltenden Dispersion oder kolloidalen Lösung, insbesondere ein Sol, inkorporiert werden (z. B. durch Lösen oder Dispergieren des Endotemplats, insbesondere auf Basis von Blockcopolymeren, in der betreffenden Dispersion oder Lösung der Nanopartikel).

Damit bei dieser besonderen Ausführungsform der vorliegenden Erfindung ein wirksames zusätzliches Porensystem generiert werden kann, sollte das Endotemplat in einem molaren Verhältnis n_{Endotemplat}/n_{Metalle}, berechnet als Molverhältnis von eingesetztem Endotemplat zu eingesetzten Metallen der Metalloxide, im Bereich von 0,005 bis 0,2, insbesondere 0,01 bis 0,1, vorzugsweise 0,015 bis 0,08, eingesetzt werden.

Im Rahmen dieser besonderen Ausführungsform der vorliegenden Erfindung, welche zusätzlich zu dem Exotemplat auf Aktivkohlebasis auch noch ein Endotemplat verwendet, wird das erfindungsgemäße Verfahren also als kombinierte Exo- und Endotemplatsynthese durchgeführt. Wie zuvor ausgeführt, resultiert in den erhaltenen partikulären porösen Materialien ein hierarchisch strukturiertes Porensystem mit bimodaler bzw. multimodaler Verteilung der Porendurchmesser. Durch die Art und Menge bzw. den Anteil an Endotemplat kann das Porensystem dann gezielt eingestellt bzw. gesteuert, insbesondere maßgeschneidert, werden.

Was die erfindungsgemäß als Exotemplat eingesetzte Aktivkohle anbelangt, so kommt - wie zuvor beschrieben - zu diesem Zweck eine kornförmige, insbesondere kugelförmige Aktivkohle zum Einsatz, wie sie kommerziell verfügbar ist (z. B. insbesondere von der Blücher GmbH, Erkrath, Deutschland, oder von der Adsor-Tech GmbH, Premnitz, Deutschland).

Die eingesetzte Aktivkohle, insbesondere in Form von Kornkohle oder Kugelkohle, ist nach bekannten Verfahren des Standes der Technik erhältlich: Üblicherweise werden zu diesem Zweck korn- bzw. kugelförmige sulfonierte organische Polymere, insbesondere auf Basis von divinylbenzolvernetztem Polystyrol, karbonisiert und anschließend zu der betreffenden Aktivkohle aktiviert. Für weitergehende diesbezügliche Einzelheiten kann beispielsweise auf die Druckschriften DE 43 28 219 A1, DE 43 04 026 A1, DE 196 00 237 A1 sowie EP 1 918 022 A1 bzw. die parallele, zu derselben Patentfamilie gehörende US 7,737,038 B2 verwiesen werden. Dies ist dem Fachmann als solches bekannt.

Die nachfolgend aufgeführten Parameterangaben bezüglich der als Exotemplat eingesetzten Aktivkohle und der resultierenden partikulären porösen Materialien werden mit genormten oder explizit angegebenen Bestimmungsverfahren oder mit dem Fachmann an sich geläufigen Bestimmungsmethoden bestimmt. Insbesondere die Parameterangaben betreffend die Charakterisierung der Porosität, der Porengrößenverteilung und von anderen Adsorptionseigenschaften ergeben sich im Allgemeinen jeweils aus der betreffenden Stickstoffsorptionsisotherme der betreffenden Aktivkohle bzw. der vermessenen Produkte.

Insbesondere wird im Rahmen der vorliegenden Erfindung als Exotemplat ein Matrixmaterial, d. h. eine Aktivkohle, eingesetzt, welche Partikelgrößen, insbesondere Teilchendurchmesser, im Bereich von 0,001 bis 2 mm, insbesondere 0,01 bis 1 mm, bevorzugt 0,05 bis 0,8 mm, vorzugsweise 0,1 bis 0,7 mm, besonders bevorzugt 0,15 bis 0,6 mm, aufweist; dabei sollten vorteilhafterweise, bezogen auf eingesetztes Matrixmaterial bzw. Aktivkohle, mindestens 80 Gew.-%, insbesondere mindestens 90 Gew.-%, vorzugsweise mindestens 95 Gew.-%, des eingesetzten Matrixmaterials Partikelgrößen, insbesondere Teilchendurchmesser, in den vorgenannten Bereichen aufweisen. Gemäß einer besonderen Ausführungsform weist das als Exotemplat eingesetzte Matrixmaterial, d. h. die Aktivkohle, mittlere Partikelgrößen (D50), insbesondere mittlere Teilchendurchmesser (D50), im Bereich von 0,01 bis 1 mm, insbesondere 0,05 bis 0,8 mm, bevorzugt 0,1 bis 0,6 mm, vorzugsweise 0,15 bis 0,5 mm, besonders bevorzugt 0,2 bis 0,4 mm, auf.

Um eine gute Beladung mit Nanopartikeln einerseits und eine hohe Porosität des Endprodukts andererseits zu gewährleisten, sollte das als Exotemplat eingesetzte Matrixmaterial, d. h. die Aktivkohle, ein großes Gesamtporenvolumen aufweisen.

Insbesondere sollte das Matrixmaterial, d. h. die Aktivkohle, ein Gesamtporenvolumen, insbesondere ein Gesamtporenvolumen nach Gurvich, im Bereich von 0,4 bis 4 cm³/g, insbesondere 0,5 bis 3,5 cm³/g, vorzugsweise 0,6 bis 3 cm³/g, besonders bevorzugt 0,7 bis 2,5 cm³/g, aufweisen. Besonders vorteilhaft ist es, wenn 50 % bis 99 %, insbesondere 60 % bis 99 %, vorzugsweise 70 % bis 95 %, des Gesamtporenvolumens, insbesondere des Gesamtporenvolumens nach Gurvich, des Matrixmaterials, d. h. der Aktivkohle, durch Poren mit Porendurchmessern von < 500 nm, insbesondere < 250 nm, vorzugsweise < 100 nm, gebildet sind.

Im Rahmen der vorliegenden Erfindung bezeichnet der Begriff der Mikroporen solche Poren mit Porendurchmessern bis zu 20 Å (d. h. 2 nm) einschließlich, wohingegen der Begriff der Mesoporen solche Poren mit Porendurchmessern von > 20 Å bis 500 Å einschließlich (d. h. > 2 nm bis 50 nm einschließlich) bezeichnet und der Begriff der Makroporen solche Poren mit Porendurchmessern > 500 Å (d. h. > 50 nm) bezeichnet.

Was die Bestimmung des Gesamtporenvolumens nach Gurvich anbelangt, so handelt es sich um eine dem Fachmann auf diesem Gebiet an sich bekannte Mess-/Bestimmungsmethode. Zu weitergehenden Einzelheiten bezüglich der Bestimmung des Gesamtporenvolumens nach Gurvich kann beispielsweise verwiesen werden auf L. Gurvich (1915), J. Phys. Chem. Soc. Russ. 47, 805, sowie auf S. Lowell et al., Characterization of Porous Solids and Powders: Surface Area Pore Size and Density, Kluwer Academic Publishers, Article Technology Series, Seiten 111 ff.

Im Rahmen des erfindungsgemäßen Verfahrens hat es sich als besonders vorteilhaft erwiesen, wenn das Matrixmaterial, d. h. die Aktivkohle, ein durch Poren mit Porendurchmesser ≤ 20 Å gebildetes Porenvolumen, insbesondere Mikroporenvolumen nach Carbon Black, im Bereich von 0,1 bis 2 cm³/g, insbesondere 0,2 bis 1,5 cm³/g, vorzugsweise 0,3 bis 1,1 cm³/g, besonders bevorzugt 0,4 bis 1 cm³/g, aufweist. Insbesondere sollten 20 % bis 95 %, insbesondere 30 % bis 95 %, vorzugsweise 40 % bis 90 % des Gesamtporenvolumens des Matrixmaterials, d. h. der Aktivkohle, durch Poren mit Porendurchmessern von ≤ 20 Å (d. h. Mikroporen) gebildet sein.

Die Bestimmungsmethode nach Carbon Black ist dem Fachmann an sich bekannt, so dass es diesbezüglich keiner weitergehender Einzelheiten bedarf. Zudem kann zu weitergehenden Einzelheiten der Bestimmung der Porenoberfläche und des Porenvolumens nach Carbon Black beispielsweise verwiesen werden auf R. W. Magee, Evaluation of the External Surface Area of Carbon Black by Nitrogen Adsorption, Presented at the Meeting of the Rubber Division of the American Chem. Soc., October 1994, z. B. referiert in: Quantachrome Instruments, AUTOSORB-1, AS1 WinVersion 1.50, Operating Manual, OM, 05061, Quantachrome Instruments 2004, Florida, USA, Seiten 71 ff.

Ebenfalls vorteilhaft ist es, wenn das als Exotemplat eingesetzte Matrixmaterial, d. h. die Aktivkohle, einen mittleren Porendurchmesser im Bereich von 1 bis 150 Å, insbesondere 1 bis 100 Å, bevorzugt 1,5 bis 75 Å, besonders bevorzugt 1,5 bis 50 Å, aufweist. Auf diese Weise wird ein entsprechendes Porensystem auch im Endprodukt erhalten. Die Bestimmung des mittleren Porendurchmessers erfolgt auf Basis der jeweiligen Stickstoffsorptionsisothermen.

Um in den Endprodukten hohe spezifische Oberflächen (BET) zu erhalten, sollte das als Exotemplat eingesetzte Matrixmaterial, d. h. die Aktivkohle, eine ausreichend große BET-Oberfläche besitzen. Insbesondere sollte das als Exotemplat eingesetzte Matrixmaterial, d. h. die Aktivkohle, eine spezifische BET-Oberfläche im Bereich von 500 m²/g bis 3.500 m²/g, insbesondere 600 bis 2.500 m²/g, vorzugsweise 700 bis 2.000 m²/g, besonders bevorzugt 800 bis 1.800 m²/g, aufweisen.

Die Bestimmung der spezifischen Oberfläche gemäß BET ist dem Fachmann grundsätzlich als solches bekannt, so dass diesbezüglich keine weitergehenden Einzelheiten ausgeführt werden zu brauchen. Alle BET-Oberflächenangaben beziehen sich auf die Bestimmung gemäß ASTM D6556-04. Im Rahmen der vorliegenden Erfindung wird zur Bestimmung der BET-Oberfläche - im Allgemeinen und sofern nachfolgend nicht ausdrücklich abweichend angegeben - die sogenannte MultiPoint-BET-Bestimmungsmethode (MP-BET) in einem Partialdruckbereich p/p₀ von 0,05 bis 0,1 angewendet.

In Bezug auf weitergehende Einzelheiten zur Bestimmung der BET-Oberfläche bzw. zu der BET-Methode kann auf die vorgenannte ASTM D6556-04 sowie auf Römpp Chemielexikon, 10. Auflage, Georg Thieme Verlag, Stuttgart/New York, Stichwort: "BET-Methode", einschließlich der dort referierten Literatur, und auf Winnacker-Küchler (3. Auflage), Band 7, Seiten 93 ff. sowie auf Z. Anal. Chem. 238, Seiten 187 bis 193 (1968), verwiesen werden.

Des Weiteren ist es von Vorteil, wenn das als Exotemplat eingesetzte Matrixmaterial, d. h. die Aktivkohle, eine ausreichende mechanische Belastbarkeit aufweist. Insbesondere weist das als Exotemplat eingesetzte Matrixmaterial, d. h. die Aktivkohle, eine Druck- und/oder Berstfestigkeit (Gewichtsbelastbarkeit) pro Aktivkohlekorn, insbesondere pro Aktivkohlekügelchen, von mindestens 10 Newton, insbesondere mindestens 15 Newton, vorzugsweise mindestens 20 Newton, auf. Insbesondere weist das als Exotemplat eingesetzte Matrixmaterial, d. h. die Aktivkohle, eine Druck- und/oder Berstfestigkeit (Gewichtsbelastbarkeit) pro Aktivkohlekorn, insbesondere pro Aktivkohlekügelchen, im Bereich von 10 bis 50 Newton, insbesondere 12 bis 45 Newton, vorzugsweise 15 bis 40 Newton, auf.

Erfindungsgemäß ist das als Exotemplat eingesetzte Matrixmaterial, d. h. die Aktivkohle, an seiner Oberfläche modifiziert. Mit anderen Worten kann erfindungsgemäß das als Exotemplat eingesetzte Matrixmaterial, d. h. die Aktivkohle, einer Oberflächenbehandlung und/oder Oberflächenmodifizierung unterzogen worden sein. Zu diesem Zweck kann das als Exotemplat eingesetzte Matrixmaterial bzw. die Aktivkohle beispielsweise an der Oberfläche mit polaren Gruppen ausgerüstet bzw. modifiziert sein. Gemäß einer anderen Ausführungsform kann das als Exotemplat eingesetzte Matrixmaterial bzw. die Aktivkohle an seiner bzw. ihrer Oberfläche hydrophil oder hydrophob ausgerüstet sein, insbesondere mit hydrophilen oder hydrophoben Gruppen modifiziert sein.

Bei dieser besonderen Ausführungsform der vorliegenden Erfindung, welche eine Oberflächenmodifizierung bzw. Oberflächenbehandlung des Exotemplats bzw. der Aktivkohle vorsieht, erfolgt die Oberflächenmodifizierung bzw. Oberflächenbehandlung des Exotemplats in Anpassung an die einzubringenden Nanopartikel bzw. deren Dispersionen oder Lösungen: Sofern eine wässrige Dispersion oder Lösung, insbesondere ein wässriges Sol, der Nanopartikel eingesetzt wird, empfiehlt sich bei dieser besonderen Ausführungsform eine polare oder hydrophile Ausrüstung der Oberfläche des Exotemplats, während bei der Verwendung von organisch basierten Dispersionen oder Lösungen der Nanopartikel eine hydrophobe Oberflächenmodifizierung vorgesehen sein sollte. Dies im Einzelfall abzustimmen oder einzustellen, liegt im Ermessen des Fachmanns.

Was die Oberflächenmodifizierung des Exotemplats anbelangt, so erfolgt die Oberflächenmodifizierung durch oxidative oder reduktive Behandlung des Matrixmaterials bzw. der Aktivkohle, wobei die oxidative oder reduktive Behandlung des Matrixmaterials grundsätzlich thermisch und/oder chemisch erfolgen kann.

Beispielsweise kann eine polare und/oder hydrophile Ausrüstung des Matrixmaterials bzw. der Aktivkohle durch oxidative thermische Behandlung erfolgen. Die polare und/oder hydrophile Ausrüstung mittels oxidativer thermischer Behandlung kann insbesondere bei der Herstellung des Matrixmaterials, insbesondere im Rahmen der Aktivierungsbehandlung bei der Herstellung der Aktivkohle, erfolgen. Durch thermische Behandlung in Gegenwart oxidierender Gase, vorzugsweise Sauerstoff, erfolgt eine polare und/oder hydrophile Ausrüstung der Oberfläche des Exotemplats, insbesondere die Anbringung hydrophiler und/oder polarer Gruppen, wie z. B. OH-Gruppen, Oxo-Gruppen etc. Alternativ kann die polare und/oder hydrophile Ausrüstung der Oberfläche des Matrixmaterials bzw. der Aktivkohle aber auch durch oxidative chemische Behandlung erfolgen, insbesondere durch Behandlung und/oder Reaktion des Matrixmaterials bzw. der Aktivkohle mit mindestens einem chemischen Oxidationsmittel (wobei das Oxidationsmittel beispielsweise ausgewählt sein kann aus der Gruppe von Salpetersäure oder anderen oxidierenden Säuren, Peroxiden und Persäuren sowie deren Mischungen oder Kombinationen).

Bei dieser besonderen Ausführungsform der vorliegenden Erfindung kann eine unpolare und/oder hydrophobe Ausrüstung der Oberfläche des Matrixmaterials bzw. der Aktivkohle insbesondere durch reduktive Behandlung des Matrixmaterials bzw. der Aktivkohle erfolgen, insbesondere durch reduktive Behandlung in Gegenwart mindestens eines Reduktionsmittels (z. B. Wasserstoff).

Durch eine gezielte Modifikation der Oberflächeneigenschaften des Exotemplats, insbesondere durch eine Kontrolle der Hydrophilie oder Hydrophobie, lässt sich eine Beladung mit verschiedenen Lösungen oder Dispersionen der Metalloxidnanopartikel besonders effizient gestalten. Sowohl die Geschwindigkeit als auch die Menge der Beladung mit den Nanopartikeln kann gegenüber nichtmodifizierten Exotemplaten deutlich gesteigert werden.

Wie zuvor beschrieben, schließt sich dem Verfahrensschritt (a) der Beladung mit Nanopartikeln ein nachfolgender zweiter Verfahrensschritt (b) der thermischen Behandlung zu Zwecken einer zumindest partiellen, vorzugsweise zu Zwecken einer zumindest im Wesentlichen vollständigen Entfernung des Matrixmaterials bzw. Endotemplats an.

Üblicherweise wird die thermische Behandlung gemäß dem zweiten Verfahrensschritt (b) unter oxidativen Bedingungen, insbesondere in Gegenwart von Sauerstoff bzw. einer sauerstoffhaltigen Atmosphäre, durchgeführt.

Üblicherweise wird die thermische Behandlung gemäß dem zweiten Verfahrensschritt (b) derart durchgeführt, dass sie zu einer zumindest partiellen, vorzugsweise zu einer zumindest im Wesentlichen vollständigen Entfernung des Matrixmaterials bzw. Exotemplats mittels Abbrand oder Pyrolyse führt.

Im Rahmen der thermischen Behandlung gemäß dem zweiten Verfahrensschritt (b) erfolgt im Allgemeinen einerseits eine Kalzinierung der Metallmischoxide und/oder andererseits ein zumindest partieller, vorzugsweise ein zumindest im Wesentlichen vollständiger Abbrand oder Pyrolyse des Matrixmaterials.

Im Allgemeinen wird die thermische Behandlung gemäß dem zweiten Verfahrensschritt (b) bei Temperaturen im Bereich von 300 bis 1.500 °C, insbesondere 400 bis 1.200 °C, vorzugsweise 500 bis 1.000 °C, besonders bevorzugt 550 bis 800 °C durchgeführt. Üblicherweise erfolgt die thermische Behandlung für eine Dauer von 1 bis 20 Stunden, insbesondere 2 bis 15 Stunden, vorzugsweise 3 bis 10 Stunden. Wie zuvor ausgeführt, wird die thermische Behandlung üblicherweise in Gegenwart einer sauerstoffhaltigen Atmosphäre bzw. in Gegenwart von Sauerstoff durchgeführt.

Was die Metalle der Mischoxide der als Endprodukt erhaltenen porösen Materialien anbelangt, so können diese insbesondere ausgewählt sein aus Metallen der Haupt- und Nebengruppen des Periodensystems der Elemente und den Lanthanoiden, bevorzugt aus der Gruppe von Al, Bi, Ce, Cu, Fe, Mn, Mo, Si, Ti, V, Zr, Co, Cr, Ni, Zn, Mg, Ca und B, besonders bevorzugt aus der Gruppe von Al, Bi, Ce, Cu, Fe, Mn, Mo, Si, Ti, V und Zr.

Erfindungsgemäß ist es bevorzugt, wenn die Mischoxide der Metalle ausgewählt sind aus der Gruppe von Aluminiumoxid, Bismutoxid, Eisenoxid, Kupferoxid, Lanthanoidoxid, insbesondere Ceroxid, Manganoxid, Molybdänoxid, Siliziumoxid, Titanoxid, Vanadiumoxid, Wolframoxid und Zirkoniumoxid.

Gemäß einer erfindungsgemäß besonders bevorzugten Ausführungsform sind die Mischoxide der Metalle ausgewählt sind aus den folgenden Kombinationen: Al₂O₃/SiO₂; Eisenoxid/Manganoxid; Kupferoxid/Manganoxid; MoO₃/Bi₂O₃; TiO₂/V₂O₅; ZrO₂/Lanthanoidoxid, insbesondere ZrO₂/CeO₂; ZrO₂/Eisenoxid; ZrO₂/Manganoxid; ZrO₂/SiO₂; ZrO₂/TiO₂. Die vorstehende Aufzählung von bevorzugten Kombinationen ist jeweils nicht abschließend zu verstehen, d. h. neben dem jeweils konkret genannten binären System auf Basis je zweier Oxide können auch noch weitere Oxide anderer Metalle hinzutreten. So kann beispielsweise das TiO₂/V₂O₅-System auch noch weitere Komponenten enthalten, wie z. B. WO₃ etc. Die vorgenannten Kombinationen sind also derart zu verstehen, dass die jeweiligen Metalloxide-Paare bzw. binären Oxidsystem mindestens vorhanden sein sollen, ohne jedoch weitere Komponenten auszuschließen.

Im Übrigen ist es erfindungsgemäß nicht ausgeschlossen, dass den porösen Materialien nach der vorliegenden Erfindung auch noch andere Inhaltsstoffe bzw. Komponenten als die Metallmischoxide zugesetzt werden, insbesondere durch nachträgliche oder anfängliche Dotierung, nachträgliche Imprägnierung oder dergleichen. So können gemäß einer besonderen Ausführungsform den porösen Materialien nach der vorliegenden Erfindung beispielsweise katalytisch aktive Metalle (wie z. B. Cu, Ag, Pt, Au, Pd, Rh, Ir, Ru, Co, Ni etc.) zugesetzt werden.

Was die resultierenden Partikel der als Endprodukt erhaltenen porösen Materialien anbelangt, so weisen diese im Allgemeinen geringere Partikelgrößen als die Exotemplate auf; dieses Phänomen lässt sich - ohne sich auf eine bestimmte Theorie festlegen zu wollen - auf eine Verdichtung der Phasen der Metallmischoxide, insbesondere aufgrund von Kristillisation, zurückzuführen, welche bei der Entfernung der Aktivkohle durch Pyrolyse eintritt. Das vorgenannte Phänomen kann sich also durch Verdichtung und Phasenumwandlung erklären lassen.

Im Allgemeinen liegt das Größenverhältnis der Partikel des eingesetzten Matrixmaterials zu den Partikeln der erhaltenen porösen Materialien im Bereich zwischen 1,1 : 1 bis 50 : 1, insbesondere 1,2 : 1 bis 20 : 1, vorzugsweise 1,4 : 1 bis 10 : 1, besonders bevorzugt 1,5 : 1 bis 5 : 1.

Wie zuvor ausgeführt, führt also das erfindungsgemäße Verfahren zu partikulären, insbesondere selbsttragenden porösen Materialien auf Basis von metallischen Mischoxiden mindestens zweier voneinander verschiedener Metalle, welche gegenüber den entsprechenden Materialien des Standes der Technik signifikant verbesserte Eigenschaften aufweisen, insbesondere im Hinblick auf die spezifischen Oberflächen (BET), die spezifischen Porenvolumina, die mechanische Stabilität, die Partikelmorphologie und die Porensysteme bzw. Porenanordnung bzw. Porengrößenverteilung.

Weiterhin betrifft die vorliegende Erfindung - gemäß einem **zweiten** Aspekt der vorliegenden Erfindung - partikuläre poröse Materialien auf Basis von metallischen Mischoxiden mindestens zweier voneinander verschiedener Metalle in Form von diskreten Partikeln, wie sie gemäß einem wie zuvor beschriebenen Verfahren nach der vorliegenden Erfindung erhältlich sind, wobei die Metalle der Mischoxide ausgewählt sind aus der Gruppe von Al, Bi, Ce, Cu, Fe, Mn, Mo, Si, Ti, V und Zr.

Gegenstand der vorliegenden Erfindung gemäß diesem Aspekt sind also partikuläre poröse Materialien auf Basis von metallischen Mischoxiden mindestens zweier voneinander verschiedener Metalle, wobei die porösen Materialien in Form von Partikeln vorliegen.

Wie zuvor bereits im Zusammenhang mit dem erfindungsgemäßen Verfahren geschildert, ist ein besonderer Vorteil der vorliegenden Erfindung darin zu sehen, dass die partikulären porösen Materialien selbsttragend ausgebildet sind bzw. dass die partikulären porösen Materialien ohne Trägermaterial ausgebildet sind.

Weiterhin von Vorteil ist, dass die erfindungsgemäßen partikulären porösen Materialien kornförmig, insbesondere kugelförmig, ausgebildet sind bzw. dass die partikulären porösen Materialien in Form von kornförmigen, insbesondere kugelförmigen, diskreten bzw. einzelnen Partikeln ausgebildet sind.

Die Form bzw. Partikelmorphologie des Exotemplats überträgt sich somit wie ein Negativabdruck auch auf die resultierenden Produkte, d. h. die erfindungsgemäßen partikulären porösen Materialien.

Wie zuvor aber im Zusammenhang mit dem erfindungsgemäßen Verfahren bereits geschildert, weisen die Partikel der erfindungsgemäßen partikulären porösen Materialien - im Vergleich zum eingesetzten Exotemplat - aber aufgrund von Verdichtungs- und Kristallisationserscheinungen verringerte Partikelgrößen bzw. verringerte Partikeldurchmesser auf.

Insbesondere weisen die partikulären porösen Materialien nach der vorliegenden Erfindung Partikelgrößen, insbesondere Teilchendurchmesser, im Bereich von 0,001 bis 1 mm, insbesondere 0,01 bis 0,8 mm, bevorzugt 0,05 bis 0,6 mm, vorzugsweise 0,1 bis 0,5 mm, auf. Bevorzugt weisen dabei insbesondere mindestens 80 Gew.-%, insbesondere mindestens 90 Gew.-%, vorzugsweise mindestens 95 Gew.-%, der Partikel der erfindungsgemäßen partikulären porösen Materialien Partikelgrößen, insbesondere Teilchendurchmesser, in den vorgenannten Bereichen auf.

Üblicherweise weisen die partikulären porösen Materialien nach der vorliegenden Erfindung mittlere Partikelgrößen (D50), insbesondere mittlere Teilchendurchmesser (D50), im Bereich von 0,01 bis 0,8 mm, insbesondere 0,05 bis 0,7 mm, bevorzugt 0,1 bis 0,6 mm, auf.

Infolge des eingesetzten Exotemplats verfügen die erfindungsgemäßen partikulären porösen Materialien über ein großes Porenvolumen. Im Allgemeinen weisen die partikulären porösen Materialien nach der vorliegenden Erfindung ein Gesamtporenvolumen, insbesondere ein Gesamtporenvolumen nach BJH (V_{BJH}), im Bereich von 0,01 bis 2 cm³/g, insbesondere 0,05 bis 1,5 cm³/g, vorzugsweise 0,05 bis 1 cm³/g, besonders bevorzugt 0,1 bis 0,8 cm³/g, auf. Insbesondere werden 50 % bis 99 %, insbesondere 60 % bis 99 %, vorzugsweise 70 % bis 95 %, des Gesamtporenvolumens, insbesondere des Gesamtporenvolumens nach BJH (V_{BJH}), der partikulären porösen Materialien durch Poren mit Porendurchmessern von < 40 Å, insbesondere < 30 Å, gebildet.

Weiterhin weisen die erfindungsgemäßen partikulären porösen Materialien einen mittleren Porendurchmesser, insbesondere bestimmt nach der BJH-Methode, im Bereich von 1 bis 35 Å, insbesondere 1 bis 30 Å, bevorzugt 1,5 bis 30 Å, besonders bevorzugt 2 bis 25 Å, auf.

Die Durchführung der Porenanalyse, insbesondere der Mesoporenanalyse, nach der BJH-Methode ist dem Fachmann als solches bekannt, so dass es diesbezüglich keiner weitergehender Einzelheiten bedarf. Die Standard-(Meso-)Porenanalyse nach der BJH-Methode beinhaltet neben der BJH-Porengrößenverteilung (DIN 66134) und dem Porenvolumen auch die Mehrpunkt-BET-Oberfläche (DIN ISO 9277).

Insbesondere für mesoporöse Substanzen mit Porengrößen von 2 bis 50 nm lassen sich Porenradienverteilung und mittlere Porendurchmesser aus der aufgenommenen Stickstoffsorptionsisothermen berechnen. Das Verfahren nach BJH (Barrett, Joyner und Halenda) beruht auf dem Effekt der Kapillarkondensation und dabei auf der Bestimmung des Volumens des flüssigen Kondensats in Poren in Abhängigkeit vom Relativdruck des gasförmigen Sorptivs (Stickstoff) über der Feststoffprobe bei konstanter Temperatur. Zur Ermittlung der BJH-Porengrößenverteilung wird die Stickstoff-Desorptionsisotherme bei der Siedetemperatur des Stickstoffs, etwa 77 K, gemessen. Der Berechnung wird ein zylindrisches Porenmodell zugrundegelegt, wobei für zylindrische Poren die Porenweite gleich dem Porendurchmesser ist. Bei einem vorgegebenen Sorptivdruck sind alle Poren gefüllt bis zu einem maximalen Radius, der für zylindrische Poren durch die Kelvingleichung gegeben ist.

Weiterhin verfügen die erfindungsgemäßen partikulären porösen Materialien über hohe spezifische Oberflächen. Insbesondere weisen die partikulären porösen Materialien nach der vorliegenden Erfindung eine spezifische BET-Oberfläche im Bereich von 10 m²/g bis 1.000 m²/g, insbesondere 15 bis 900 m²/g, vorzugsweise 20 bis 500 m²/g, besonders bevorzugt 25 bis 300 m²/g, auf.

Wie zuvor beschrieben, kann gemäß einer besonderen Ausführungsform des erfindungsgemäßen Herstellungsverfahrens zusätzlich zu dem Exotemplat ein sogenanntes Endotemplat eingesetzt werden. Gemäß dieser besonderen Ausführungsform weisen die partikulären porösen Materialien ein hierarchisch strukturiertes bzw. ein hierarchisch aufgebautes Porensystem auf. Insbesondere weisen die partikulären porösen Materialien nach der vorliegenden Erfindung gemäß dieser Ausführungsform eine bimodale oder multimodale Porendurchmesserverteilung auf; dabei können die erfindungsgemäßen partikulären porösen Materialien mindestens ein erstes und zweites Porensystem aufweisen, deren Verteilungsmaxima der Porendurchmesser um mindestens 5 nm, insbesondere um mindestens 10 nm, differieren (insbesondere bezogen auf das Diagramm "Differentielles Porenvolumen (dV/dD)/Porendurchmesser (D)").

Weiterhin zeichnen sich die erfindungsgemäßen partikulären porösen Materialien durch eine hohe mechanische Belastbarkeit aus. Insbesondere weisen die erfindungsgemäßen partikulären porösen Materialien eine Druck- und/oder Berstfestigkeit (Gewichtsbelastbarkeit) pro Korn, insbesondere pro Kügelchen, der partikulären porösen Materialien von mindestens 1 Newton, insbesondere mindestens 2 Newton, vorzugsweise mindestens 5 Newton, auf. Üblicherweise weisen die partikulären porösen Materialien nach der vorliegenden Erfindung eine Druck- und/oder Berstfestigkeit (Gewichtsbelastbarkeit) pro Korn, insbesondere pro Kügelchen, der porösen Materialien im Bereich von 1 bis 30 Newton, insbesondere 2 bis 25 Newton, vorzugsweise 5 bis 20 Newton, auf.

Eine weitere Besonderheit der vorliegenden Erfindung ist darin zu sehen, dass die partikulären porösen Materialien nach der vorliegenden Erfindung zumindest teilkristallin, insbesondere zumindest im Wesentlichen vollständig kristallin, ausgebildet sind. Bevorzugterweise weisen die partikulären porösen Materialien einen Kristallinitätsgrad von mindestens 25 %, insbesondere mindestens 30 %, vorzugsweise mindestens 40 %, besonders bevorzugt mindestens 50 %, ganz besonders bevorzugt mindestens 60 % und mehr, auf. Dies führt zu besonders vorteilhaften Eigenschaften in katalytischen, aber auch in anderen Anwendungen der partikulären porösen Materialien nach der vorliegenden Erfindung.

Was die Metalle der Mischoxide der partikulären porösen Materialien anbelangt, so können nahezu beliebige Metalle zum Einsatz kommen. Erfindungsgemäß sind die Metalle der Mischoxide ausgewählt aus der Gruppe von Al, Bi, Ce, Cu, Fe, Mn, Mo, Si, Ti, V und Zr. Vorzugsweise sind die Mischoxide der Metalle der erfindungsgemäßen partikulären porösen Materialien ausgewählt aus der Gruppe von Aluminiumoxid, Bismutoxid, Eisenoxid, Kupferoxid, Ceroxid, Manganoxid, Molybdänoxid, Siliziumoxid, Titanoxid, Vanadiumoxid und Zirkoniumoxid.

Gemäß einer erfindungsgemäß besonders bevorzugten Ausführungsform sind die Mischoxide der Metalle der erfindungsgemäßen partikulären porösen Materialien ausgewählt aus den folgenden Kombinationen: Al₂O₃/SiO₂; Eisenoxid/Manganoxid; Kupferoxid/Manganoxid; MoO₃/Bi₂O₃; TiO₂/V₂O₅; ZrO₂/Lanthanoidoxid, insbesondere ZrO₂/CeO₂; ZrO₂/Eisenoxid; ZrO₂/Manganoxid; ZrO₂/SiO₂; ZrO₂/TiO₂. Die vorstehende Aufzählung von bevorzugten Kombinationen ist jeweils nicht abschließend zu verstehen, d. h. neben dem jeweils konkret genannten binären System auf Basis je zweier Oxide können auch noch weitere Oxide anderer Metalle hinzutreten. So kann beispielsweise das TiO₂/V₂O₅-System auch noch weitere Komponenten enthalten, wie z. B. WO₃ etc. Die vorgenannten Kombinationen sind also derart zu verstehen, dass die jeweiligen Metalloxide-Paare bzw. binären Oxidsystem mindestens vorhanden sein sollen, ohne jedoch weitere Komponenten auszuschließen.

Auch die Anteile bzw. Masseverhältnisse der voneinander verschiedenen Metalle der metallischen Mischoxide können in den partikulären porösen Materialien in sehr weiten Bereichen variieren: Insbesondere können die Gewichts- oder Masseverhältnisse der mindestens zwei voneinander verschiedenen Metalle der metallischen Mischoxide, berechnet als Metalle, im Bereich von 1 : 99 bis 99 : 1, insbesondere 5 : 95 bis 95 : 5, vorzugsweise 10 :90 bis 90 : 10, variieren.

Im Übrigen ist es erfindungsgemäß nicht ausgeschlossen, dass die partikulären porösen Materialien nach der vorliegenden Erfindung auch noch andere Inhaltsstoffe bzw. Komponenten als die Metallmischoxide enthalten (z. B. insbesondere durch nachträgliche oder anfängliche Dotierung, nachträgliche Imprägnierung oder dergleichen). So können beispielsweise gemäß einer besonderen Ausführungsform die partikulären porösen Materialien nach der vorliegenden Erfindung beispielsweise katalytisch aktive Metalle (wie z. B. Cu, Ag, Pt, Au, Pd, Rh, Ir, Ru, Co, Ni etc.) enthalten.

Die erfindungsgemäßen partikulären porösen Materialien nach der vorliegenden Erfindung ermöglichen ein breites Anwendungsspektrum.

Weiterer Gegenstand der vorliegenden Erfindung - gemäß einem **dritten** Aspekt der vorliegenden Erfindung - sind somit die erfindungsgemäßen Verwendungen der nach dem erfindungsgemäßen Verfahren erhältlichen partikulären porösen Materialien.

Insbesondere können die erfindungsgemäßen partikulären porösen Materialien als Katalysatoren oder Katalysatorträger (Katalysatorträgermaterialien) eingesetzt werden. Aufgrund ihrer hohen thermischen und mechanischen Stabilität sind die erfindungsgemäßen partikulären porösen Materialien für diese Anwendungen, insbesondere auch unter hohen Temperaturen, besonders geeignet. Für katalytische Anwendungen sind zudem die hohe spezifische Oberfläche und das große spezifische Porenvolumen der partikulären porösen Materialien nach der vorliegenden Erfindung von entscheidender Bedeutung.

So können die erfindungsgemäßen partikulären porösen Materialien beispielsweise für die katalytische Behandlung von Abgasen aus Verbrennungsprozessen, insbesondere Abgasen aus Verbrennungsmotoren oder Abgasen aus chemischen oder industriellen Prozessen, insbesondere Rauchgasen, Anwendung finden.

Für diese Zwecke besonders geeignet sind insbesondere erfindungsgemäße Materialien auf Basis von Zirkoniumoxid mit mindestens einem weiteren Metalloxid auf Basis von Ceroxid, Eisenoxid, Titanoxid oder Siliziumoxid, bevorzugt ein erfindungsgemäßes partikuläres poröses Material auf Basis von CeO₂/ZrO₂. So können insbesondere erfindungsgemäße partikuläre poröse Materialien auf Basis von CeO₂/ZrO₂ Anwendung finden in oder als Katalysatoren zur Behandlung von Abgasen von Verbrennungsmotoren. Auch für andere katalytische Verwendungen, z. B. bei sogenannten Umweltkatalysen, bei denen es um den Abbau umweltschädlicher Substanzen (z. B. sogenannte Volatile Organic Compounds oder VOCs) geht, können die erfindungsgemäßen partikulären porösen Materialien zur Anwendung kommen.

Weiterhin eignen sich die erfindungsgemäßen partikulären porösen Materialien beispielsweise auch zur katalytischen Entfernung von Stickoxiden aus Abgasen von Verbrennungsprozessen. Zu diesem Zweck können insbesondere erfindungsgemäße partikuläre poröse Materialien auf Basis von V₂O₅/TiO₂ zum Einsatz kommen. Diese Anwendung ermöglicht unter anderem die Reinigung von mit organischen Stoffen verunreinigten Abwässern.

Weiterhin eignen sich die erfindungsgemäßen partikulären porösen Materialien zur Katalyse chemischer Prozesse und Reaktionen.

Diesbezüglich lassen sich die erfindungsgemäßen partikulären porösen Materialien beispielsweise für die katalytische Herstellung bzw. Synthese von Massechemikalien (Bulk-Chemikalien) wie auch von Feinchemikalien (z. B. für die Hydrierung, die Oxidation etc.) einsetzen, beispielsweise im Rahmen der Herstellung von Schwefelsäure, Ammoniak etc.

Weiterhin können die erfindungsgemäßen partikulären porösen Materialien Verwendung in der Photokatalyse finden. Zu diesem Zweck sind insbesondere erfindungsgemäße poröse Materialien geeignet, welche TiO₂ enthalten.

Eine weitere Anwendungsmöglichkeit der erfindungsgemäßen partikulären porösen Materialien liegt in der Verwendung in oder als Gassensoren.

Weiterhin eignen sich die erfindungsgemäßen partikulären porösen Materialien beispielsweise auch in der Verwendung in Brennstoffzellen.

Schließlich eignen sich die erfindungsgemäßen partikulären porösen Materialien auch für sorptive, insbesondere adsorptive Anwendungen, insbesondere als vorzugsweise reaktives Adsorbens.

Im Rahmen der vorliegenden Erfindung lassen sich also kornförmige, insbesondere kugelförmige poröse Mischoxide, insbesondere auf Basis selbsttragender bzw. trägerfreier Partikel dieser Mischoxide, herstellen. Insbesondere lassen sich mit dem erfindungsgemäßen Verfahren Mischoxide mit gezielt einstellbarer Porosität als kornförmige bzw. kugelförmige Partikel von definierter Größe herstellen, wobei zu diesem Zweck kornförmige, insbesondere kugelförmige poröse Aktivkohlematerialien als struktur- und formgebende Agenzien in Form von Exotemplaten genutzt werden.

Die nach der vorliegenden Erfindung herstellbaren Materialien sind für die verschiedensten Anwendungen geeignet, z. B. als Katalysatoren oder Katalysatorträger, als (reaktive) Sorbentien, insbesondere Adsorbentien, für den Bereich der Brennstoffzellentechnologie, für den Bereich der Gassensoren etc.

Im Rahmen der vorliegenden Erfindung werden unter Nutzung sogenannter Exotemplate auf der Grundlage von Aktivkohle kornförmige bzw. kugelförmige Mischoxide erhalten. Auf diese Weise lassen sich die Porosität und die Partikeleigenschaften (wie z. B. der Kugeldurchmesser etc.) gezielt kontrollieren bzw. einstellen. Die erfindungsgemäß hergestellten Mischoxidpartikel verfügen über eine ausgezeichnete mechanische Stabilität und einen hohen Kristallinitätsgrad. Es resultieren Mischoxide mit definierter Porosität in Partikelform auf Basis von Körnern oder Kugeln mit einstellbaren Durchmessern. Durch die Nutzung von Aktivkohlekörnern bzw. Aktivkohlekugeln mit gezielt einstellbaren Eigenschaften (z. B. Partikeldurchmesser, Porosität, mechanische Stabilität, Oberflächeneigenschaften etc.) werden Mischoxide mit den entsprechend gewünschten Eigenschaften hergestellt.

Im Rahmen der vorliegenden Erfindung wird also die Synthese von Mischoxiden verschiedenster Zusammensetzungen durch die Nutzung von Aktivkohlekugeln mit definierten Eigenschaften als Exotemplaten beschrieben. Zu diesem Zweck werden insbesondere Vorläufer der Oxide, wie z. B. Metallsalze oder Metallalkoxide, in Lösung oder Suspension in die Poren der Aktivkohlekugeln eingebracht, wobei bevorzugt zu diesem Zweck Nanosole der entsprechenden Oxide eingesetzt werden. Nach Trocknung und gegebenenfalls Vernetzung der Mischoxide oder ihrer Vorläufer in den Poren der Aktivkohle wird die Aktivkohle pyrolytisch bzw. mittels Abbrand entfernt. Je nach Ausgangsverbindung können Mischoxide verschiedenster Elemente hergestellt werden, wie z. B. Mischoxide auf Basis von Silizium, Zirkonium, Cer, Aluminium, Titan etc., und zwar in Form poröser Körner oder Kugeln.

Durch die Nutzung der Aktivkohlekugeln als Exotemplate mit definierten Partikeldurchmessern, definierter Porosität und hoher mechanischer Stabilität können auch die Eigenschaften der resultierenden Mischoxide (wie z. B. Partikeldurchmesser, Porosität, mechanische Stabilität etc.) gezielt eingestellt bzw. kontrolliert werden. Das erfindungsgemäße Verfahren eignet sich zudem für die Herstellung einer Vielzahl von Mischoxiden, d. h. es ist universell anwendbar, - und zwar auch in Bezug auf Mischoxide, die bislang nicht oder nicht mit diesen Eigenschaften zugänglich waren.

Durch eine gezielte Modifikation der Oberflächeneigenschaften der Exotemplate, insbesondere durch hydrophile oder hydrophobe Ausrüstung der entsprechenden Aktivkohlekugeln, lässt sich die Beladung mit verschiedenen Lösungen oder Dispersionen der Mischoxidvorläufer besonders effizient gestalten: Sowohl die Geschwindigkeit als auch die Menge der Beladung in den Aktivkohlekugeln kann gegenüber nichtmodifizierten Aktivkohlekugeln deutlich gesteigert werden.

Zudem erlaubt das erfindungsgemäße Verfahren auch die zusätzliche Zugabe von Endotemplaten, insbesondere auf Basis von strukturdirigierenden oder porogenen (porenbildenden) Reagenzien, mit denen weitere Porensysteme in den resultierenden Mischoxiden erzeugt werden können. Solche Porensysteme besitzen insbesondere andere Strukturen und andere Porendurchmesserbereiche als diejenigen, welche durch die Porosität des Exotemplats hervorgerufen werden. Es resultieren auf diese Weise hierarchisch strukturierte Materialien mit bimodaler bzw. multimodaler Porengrößenverteilung.

Insbesondere lassen sich im Rahmen der erfindungsgemäßen Herstellung auch Mischoxidkugeln bzw. -körner von hoher mechanischer Stabilität erzeugen.

Insgesamt zeichnen sich die Mischoxidprodukte durch ihre Korn- bzw. Kugelform sowie ihre einstellbaren Eigenschaften der chemischen Zusammensetzung, des Kugeldurchmessers und der Porosität sowie der mechanischen Stabilität aus.

Im Rahmen der vorliegenden Erfindung ist es somit erstmals gelungen, ein effizientes Verfahren für die Herstellung solcher Materialien bereitzustellen. Derartige Materialien, welche alle vorgenannten Eigenschaften ineinander vereinigen, sind nach dem Stand der Technik bislang noch nicht hergestellt worden.

Im Folgenden wird die vorliegende Erfindung anhand von bevorzugte Ausführungsbeispiele darstellenden Zeichnungen bzw. Figurendarstellungen näher erläutert. Im Zusammenhang mit der Erläuterung dieser bevorzugten Ausführungsbeispiele der vorliegenden Erfindung, welche jedoch in Bezug auf die vorliegende Erfindung keinesfalls beschränkend sind, werden auch weitergehende Vorteile, Eigenschaften, Aspekte und Merkmale der vorliegenden Erfindung beschrieben.

In den Figurendarstellungen zeigt:
- Fig. 1: eine schematische Darstellung eines Templatverfahrens (Templatsynthese) anhand einer Endotemplat-Synthese einerseits (Fig. 1A) und einer Exotemplat-Synthese andererseits (Fig. 1B),
- Fig. 2: eine schematische Darstellung des erfindungsgemäßen Verfahrensablaufs unter Verwendung sowohl von Exotemplaten als auch von Endotemplaten zur Ausbildung einer bimodalen Porengrößenverteilung in den resultierenden Produkten,
- Fig. 3: REM-Aufnahmen einer erfindungsgemäß als Exotemplat eingesetzten kugelförmigen Aktivkohle (Fig. 3A) sowie eines partikulären porösen Materials nach der vorliegenden Erfindung auf Basis von CeO₂/ZrO₂ (Fig. 3B),
- Fig. 4: Stickstoffsorptionsisothermen von erfindungsgemäßen porösen Mischoxid-Partikeln, welche mit Exotemplat oder mit Endo- und Exotemplat hergestellt sind gegenüber einer nichterfindungsgemäßen Ausführungsform, welche nur mit Endotemplat hergestellt ist,
- Fig. 5: Porendurchmesserverteilungen von erfindungsgemäßen porösen Mischoxidpartikeln unter Verwendung nur eines Exotemplats und unter Verwendung eines Endo- und Exotemplats gegenüber einer nichterfindungsgemäßen Ausführungsform nur unter Verwendung eines Endotemplats,
- Fig. 6: Porendurchmesserverteilungen verschiedener erfindungsgemäßer poröser Mischoxidpartikel unter Einfluss des Endotemplatanteils,
- Fig. 7: graphische Darstellungen von Stickstoffsorptionsisothermen erfindungsgemäßer poröser Mischoxidpartikel ausgehend von unterschiedlichen Aktivkohle-Exotemplaten,
- Fig. 8: graphische Darstellungen von BET-Oberflächen von Cer/Zirkonium-Mischoxidpartikeln nach der vorliegenden Erfindung in Abhängigkeit vom jeweiligen Cer- und Zirkoniumanteil,
- Fig. 9: Röntgenpulverdiffraktogramme von erfindungsgemäßen Cer/Zirkonium-Mischoxidpartikeln mit unterschiedlichen Anteilen an Cer- und Zirkoniumoxid,
- Fig. 10: Stickstoffsorptionsisothermen von erfindungsgemäßen porösen V₂O₅/TiO₂-Mischoxidpartikeln mit variierendem Vanadiumoxid- und Titanoxid-Gehalt,
- Fig. 11: Röntgenpulverdiffraktogramme von erfindungsgemäßen porösen V₂O₅/TiO₂-Mischoxidpartikeln mit variierendem Vanadiumoxid- und Titanoxid-Gehalt,
- Fig. 12: Röntgenpulverdiffraktogramme von Syntheseprodukten mit Exo- und Endotemplat (erfindungsgemäß), nur mit Exotemplat (erfindungsgemäß) und mittels Fällungssynthese nach dem Stand der Technik (nicht erfindungsgemäß),
- Fig. 13: Röntgenpulverdiffraktogramme von erfindungsgemäßen Cer/Zirkonium-Mischoxidpartikeln vom Typ CeₓZr₁₋ₓO₂ mit x = 0,1 bis 0,9 mit variablem Gehalt an Cer- und Zirkoniumoxid,
- Fig. 14: REM-Aufnahme eines erfindungsgemäßen porösen Cer/Zirkonium-Mischoxids.

Fig. 1 zeigt eine schematische Darstellung eines Templatverfahrens (Templatsynthese). Die obere Abbildung gemäß Fig. 1A zeigt schematisch eine Endotemplat-Synthese, im Rahmen derer das Templat von den Ausgangsverbindungen umgeben bzw. eingeschlossen und nachfolgend entfernt wird. Bei der unteren Abbildung gemäß Fig. 1B werden dagegen die Ausgangsverbindungen in das Templat bzw. dessen Hohlräume (Poren) eingebracht, bevor das Templat dann nach erfolgter Reaktion entfernt wird. In beiden Fällen wird sozusagen ein Negativabdruck des Templats erhalten. Wie zuvor beschrieben, treten in der Praxis aufgrund verschiedener Effekte, insbesondere aufgrund von Sinterungs- und Kristallisationseffekten, jedoch Abweichungen hiervon auf.

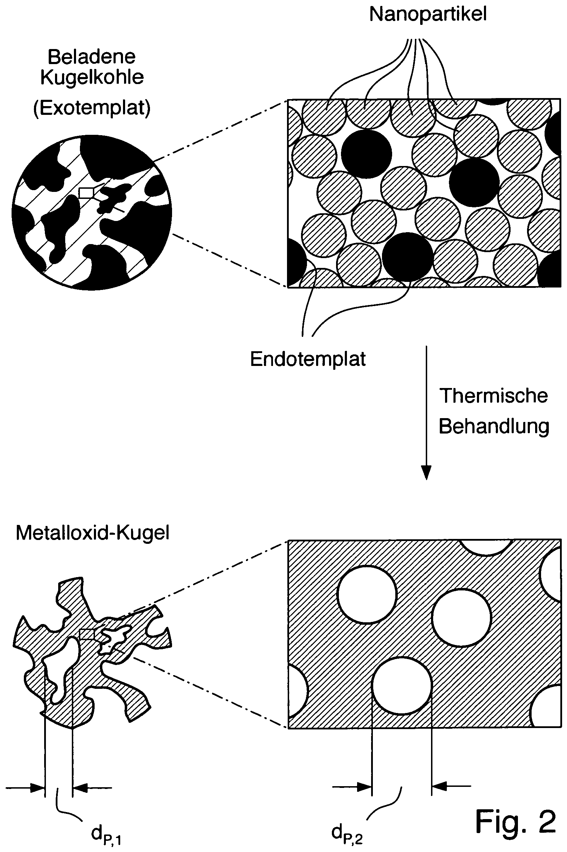

Im Rahmen der vorliegenden Erfindung können Exotemplat- und Endotemplat-Synthese miteinander kombiniert werden. Dies ist in der Fig. 2 veranschaulicht, welche eine schematische Darstellung des erfindungsgemäßen Verfahrensablaufs unter Verwendung sowohl von Exotemplaten als auch von Endotemplaten zeigt. Zu diesem Zweck kann eine sowohl die MetalloxidNanopartikel als auch die Endotemplate enthaltende Dispersion oder Lösung in das Exotemplat (Kugelaktivkohle) eingebracht werden, woraufhin sich dann eine thermische Behandlung zu Zwecken der Kalzinierung und Entfernung des Exotemplats sowie des Endotemplats anschließt. Es resultiert ein Produkt, welches eine bimodale Porengrößenverteilung aufweist, wobei in der Figurendarstellung gemäß Fig. 2 der Porendurchmesser "d_{P,1}" das Porensystem bzw. den Porendurchmesser infolge der Verwendung des Exotemplats und der Porendurchmesser "d_{P,2}" das Porensystem bzw. den Porendurchmesser infolge der Verwendung des Endotemplats zeigt.

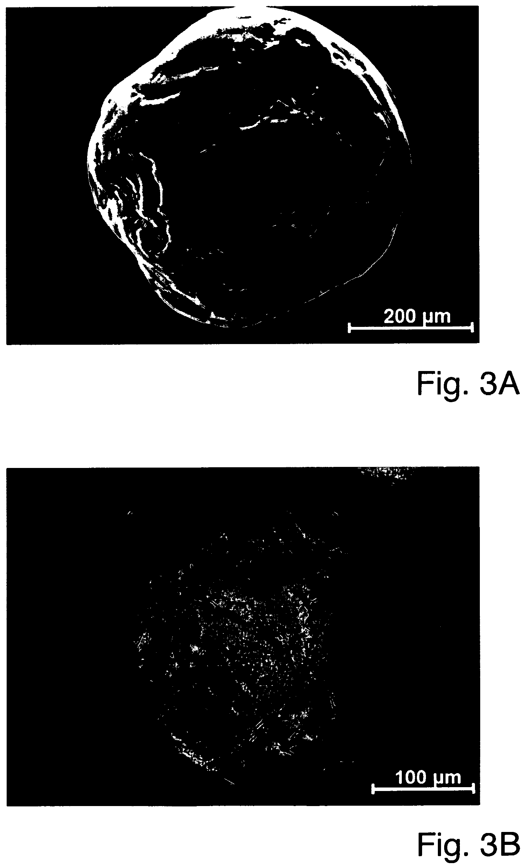

Die Figurendarstellung gemäß Fig. 3 zeigt REM-Aufnahmen einer erfindungsgemäß als Exotemplat eingesetzten kugelförmigen Aktivkohle (Fig. 3A) sowie eines partikulären porösen Materials nach der vorliegenden Erfindung (Fig. 3B), wobei sowohl Exotemplat als auch Produkt in kugelförmiger Form vorliegen bzw. erhalten werden. Wie die Maßstabsangabe in den Figurendarstellungen gemäß Fig. 3A und Fig. 3B jedoch zeigt, weisen die Kugeln des Produkts deutlich geringere Durchmesser gegenüber den eingesetzten Aktivkohlekugeln auf, was sich auf eine Verdichtung der Phasen aufgrund von Kristallisationseffekten zurückführen lässt.

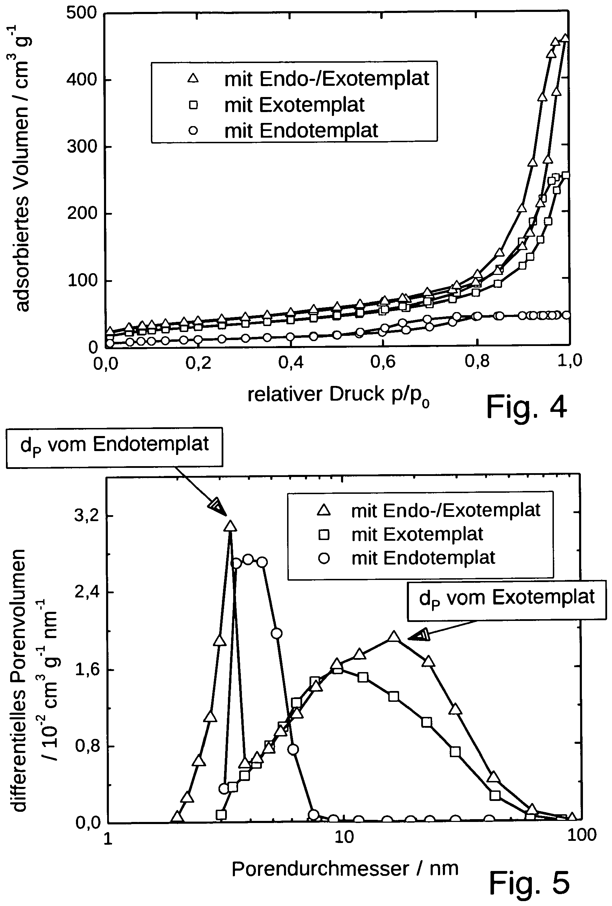

Fig. 4 wiederum zeigt verschiedene Stickstoffsorptionsisothermen (d. h. Adsorptions- sowie Desorptionsisothermen) von erfindungsgemäßen porösen Mischoxid-Partikeln. Die beiden oberen Kurven (mit dem Symbol "Dreieck") betreffen erfindungsgemäße Produkte, welche sowohl mit Endo- als auch mit Exotemplat hergestellt worden sind, während die mittleren Kurven (mit dem Symbol "Quadrat") erfindungsgemäße Produkte betreffen, welche nur mit Exotemplat hergestellt sind. Die beiden unteren Kurven (mit dem Symbol "Kreis") sind nichterfindungsgemäße Produkte, welche nur unter Verwendung von Endotemplat hergestellt sind.

Die Figurendarstellung gemäß Fig. 5 wiederum zeigt Porendurchmesserverteilungen von erfindungsgemäßen porösen Mischoxidpartikeln, welche unter Verwendung nur eines Exotemplats (Symbol "Quadrat") oder unter Verwendung eines Endo- und Exotemplats (Symbol "Dreieck") hergestellt sind. Als Vergleich dient ein nichterfindungsgemäßes Produkt, welches nur mit Endotemplat hergestellt worden ist (Symbol "Kreis"). Wie Fig. 5 zeigt, führt die Verwendung sowohl von Endo- als auch Exotemplat zu einer bimodalen Porendurchmesserverteilung infolge zweier Porensysteme, von denen eines auf das Exotemplat und das andere auf das Endotemplat zurückgeht.

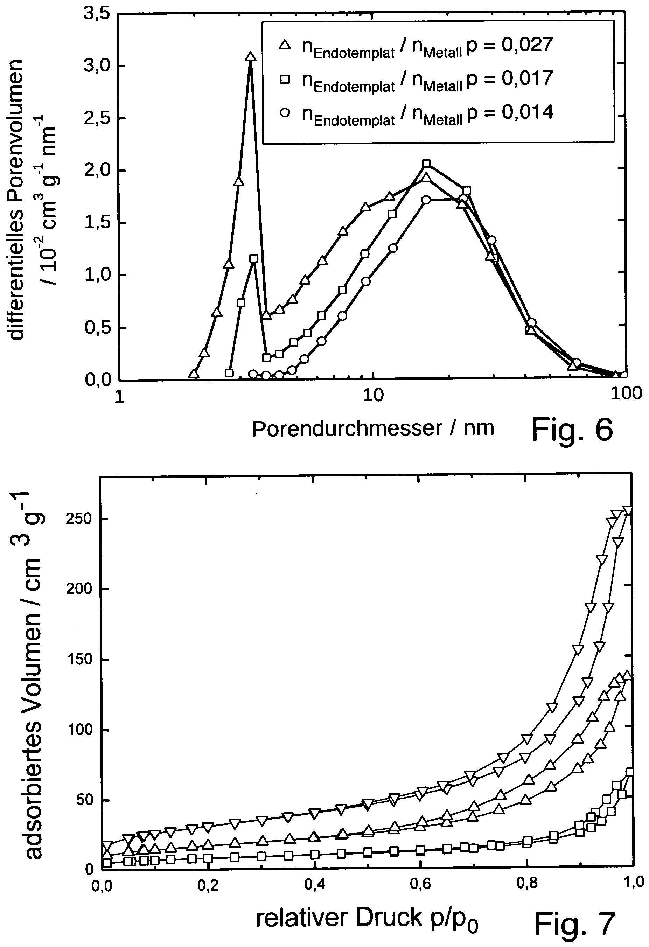

Fig. 6 wiederum zeigt den Einfluss des Endotemplatgehalts auf die Ausbildung des zweiten Porensystems bei kombinierter Exotemplat- und Endotemplat-Synthese.

Die Figurendarstellung gemäß Fig. 7 wiederum zeigt graphische Darstellungen von Stickstoffsorptionsisothermen verschiedener erfindungsgemäßer poröser Mischoxidpartikel, welche ausgehend von unterschiedlichen Aktivkohle-Exotemplaten hergestellt worden sind (vgl. Ausführungsbeispiel 6).

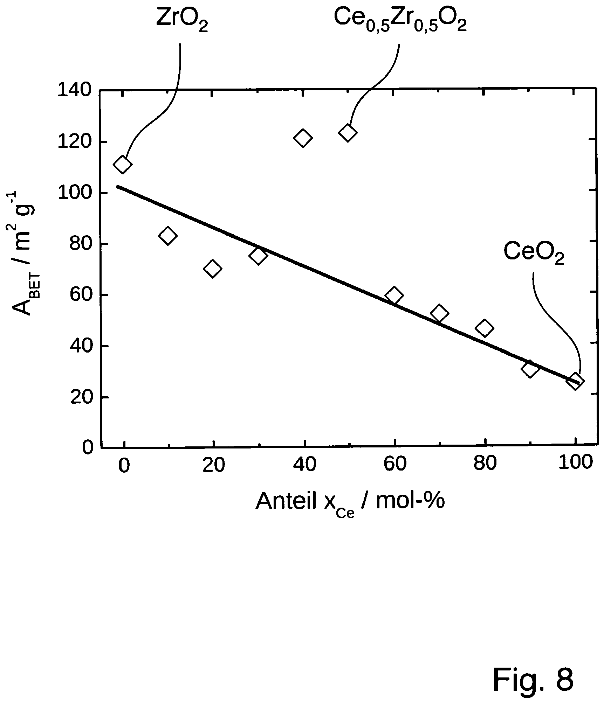

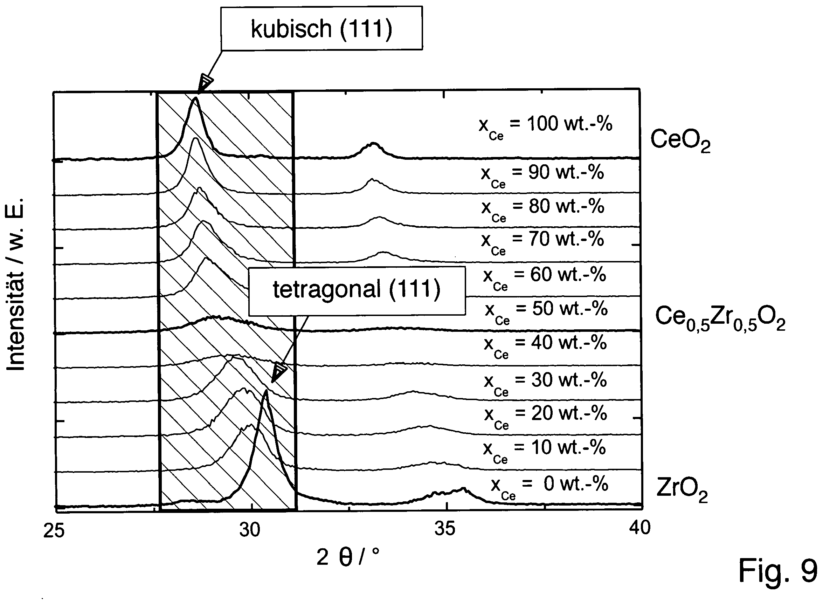

Die Figurendarstellung gemäß Fig. 8 zeigt eine graphische Darstellung von BET-Oberflächen von erfindungsgemäßen Mischoxidpartikeln auf Basis von Ceroxid/Zirkoniumoxid nach der vorliegenden Erfindung in Abhängigkeit vom jeweiligen Cer- und Zirkoniumanteil, während die entsprechende Figurendarstellung gemäß Fig. 9 die betreffenden Röntgenpulverdiffraktogramme dieser erfindungsgemäßen Produkte zeigt.

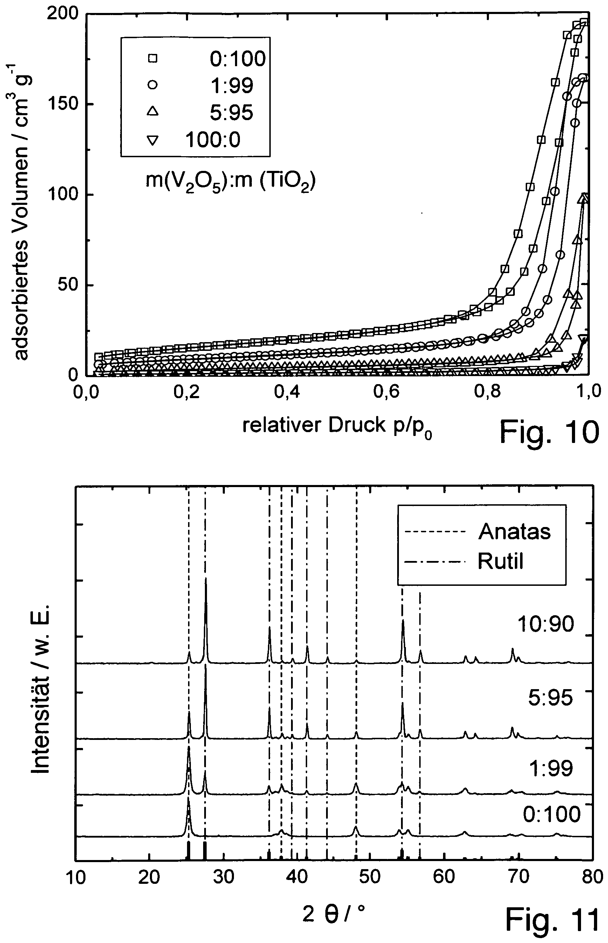

Die Figurendarstellung Fig. 10 wiederum zeigt verschiedene Stickstoffsorptionsisothermen von erfindungsgemäßen porösen V₂O₅/TiO₂-Mischoxidpartikeln mit variierendem Vanadiumoxid- und Titanoxid-Gehalt, während Fig. 11 die entsprechenden Röntgenpulverdiffraktogramme dieser Produkte zeigt.

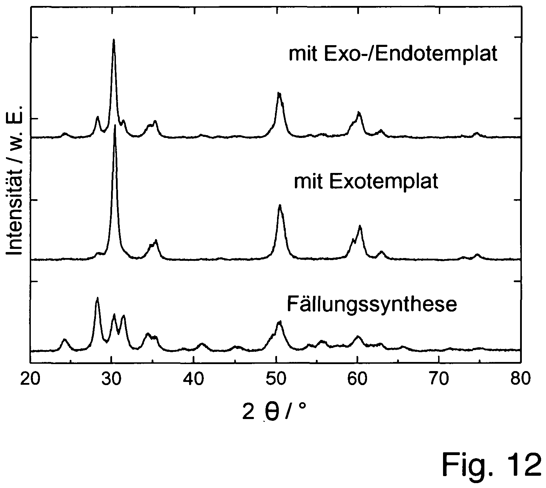

Fig. 12 wiederum zeigt Röntgenpulverdiffraktogramme von Syntheseprodukten mit Exo- und Endotemplat (erfindungsgemäß), nur mit Exotemplat (ebenfalls erfindungsgemäß) sowie mittels Fällungssynthese nach dem Stand der Technik (nicht erfindungsgemäß).

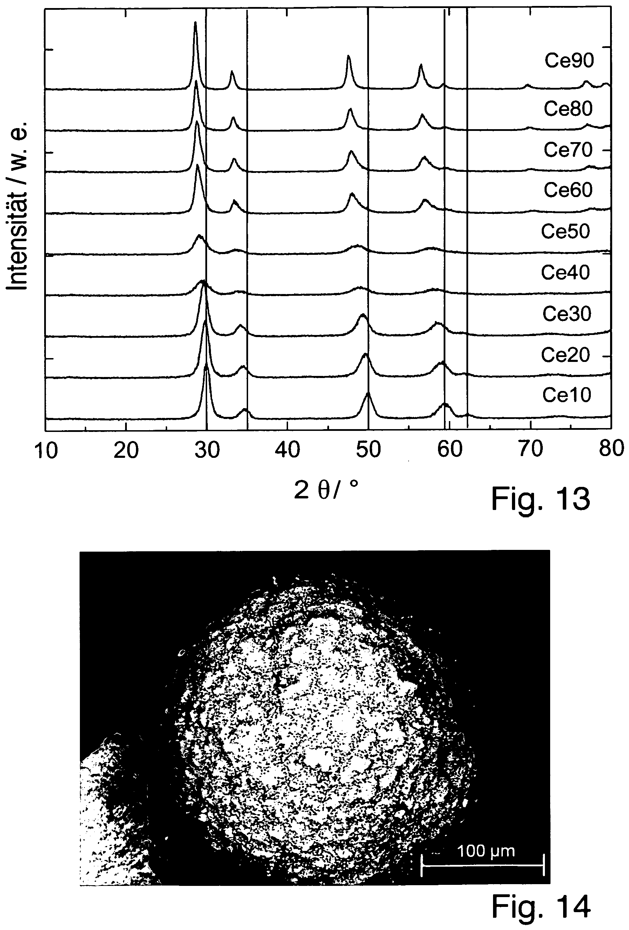

Fig. 13 zeigt Röntgenpulverdiffraktorgramme von erfindungsgemäßen Cer/Zirkonium-Mischoxidpartikeln vom Typ CeₓZr₁₋ₓO₂ mit x = 0,1 bis 0,9 mit variablem Gehalt an Cer- und Zirkoniumoxid, während Fig. 14 eine REM-Aufnahme eines erfindungsgemäßen porösen Cer/Zirkonium-Mischoxids zeigt.

Die voranstehend erläuterten Figurendarstellungen werden auch im Rahmen der erfindungsgemäßen Ausführungsbeispiele nochmals weiterführend erläutert werden.

Weitere Ausgestaltungen, Abwandlungen, Variationen, Modifikationen, Besonderheiten und Vorteile der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung jedoch keinesfalls beschränken sollen.

### AUSFÜHRUNGSBEISPIELE:

### Ausführungsbeispiel 1:

Für die Synthese von erfindungsgemäßen porösen Cer/Zirkonium-Mischoxidpartikeln wurde zunächst ein gemeinsames Sol von Cerdioxid-Nanopartikeln und Zirkoniumdioxid-Nanopartikeln hergestellt. Die betreffenden Nanopartikel wurden durch Präzipitation ausgehend von entsprechenden Präkursorsalzen der beiden vorgenannten Metalle erhalten.

Das Sol von Zirkoniumdioxid-Nanopartikeln wurde wie folgt erhalten: Zirkoniumhydroxid Zr(OH)₄ wurde aus einer wässrigen Lösung von 7,28 g ZrOCl₂ in 75 g entionisiertem Wasser durch Zugabe einer Ammoniaklösung bis zu einem pH-Wert von 8,4 unter Rühren gefällt; nach einer weiteren Stunde unter Rühren bei Raumtemperatur wurde der Niederschlag abfiltriert und mit entionisiertem Wasser bis zur Neutralität des Waschwassers gewaschen, wobei anschließend zu dem wasserhaltigen Filterkuchen entionisiertes Wasser bis zu einer Gesamtmasse von 29 g hinzugefügt und mit 1,6 ml einer 65-%igen HNO₃-Lösung aufgeschlämmt. Das Zirkoniumdioxid-Nanopartikelsol wurde nach Behandlung dieser Suspension von einer 120 min in einem Ultraschallbad erhalten. In entsprechender Weise wurde ein Sol von Cerdioxid-Nanopartikel hergestellt. Durch Vereinigung der beiden Sole entsteht ein Sol, welches sowohl Zirkoniumdioxid-Nanopartikel als auch Cerdioxid-Nanopartikel enthält.

Ein Teil des Sols wurde als solches eingesetzt. Ein weiterer Teil des Sols wurde mit verschiedenen Mengen eines Endotemplats versehen (Triblockcopolymer vom Typ Pluronic® von der BASF, Ludwigshafen, Deutschland, einem Blockcopolymer aus Ethylenoxid und Propylenoxid [= Poloxamer]); die molare Menge des Triblockcopolymers ("TBC") wird relativ zur Gesamtmetallmenge (d. h. Zirkonium und Cer) im Sol ("n_{TBC}/n_{Metalle}") angegeben.

In einem nächsten Schritt wurden 2,5 g Aktivkohlekugeln nach Trocknung bei 110 °C an Luft Aktivkohle von der Adsor-Tech GmbH, Premnitz, Deutschland [BET-Oberfläche: 1.748 m²/g, Gesamtporenvolumen nach Gurvich: 2 cm³/g, Kugeldurchmesser: 0,45 bis 0,50 mm]) mit den zuvor hergestellten Nanopartikel-Solen imprägniert. Nach Trocknung bei 60 °C wurden die auf diese Weise beladenen Aktivkohlekugeln dann bei 600 °C fünf Stunden lang in einem Luftstrom von 40 cm³/min kalziniert, um den Kohlenstoff mittels Pyrolyse zu entfernen. Aus den so erhaltenen farblosen CeO₂/ZrO₂-Kugeln wurden Kornfraktionen im Bereich von 0,2 bis 0,4 mm ausgesiebt.

Zum Vergleich wurden auch Synthesen einerseits ohne Aktivkohlekugeln (d. h. ohne Exotemplat) (nicht erfindungsgemäß) und andererseits ohne Triblockcopolymer, aber mit Aktivkohlekugeln (erfindungsgemäß) und zum weiteren Vergleich nur mit Triblockcopolymer (n_{TBC}/n_{Metalle} = 0,020) (nicht erfindungsgemäß) durchgeführt. Zudem wurde zum weiteren Vergleich Cer/Zirkonium-Mischoxid durch gemeinsame Fällung aus einer wässrigen Lösung hergestellt (nicht erfindungsgemäß).

Die Partikelmorphologie der erhaltenen Feststoffe wurde mittels Rasterelektronmikroskopie (REM, Philips, ESEM XL 30 FEG), das Porensystem mittels Stickstoffsorption bei -196 °C (Micromeritics, ASAP 2010) und die vorliegenden Phasen mittels Röntgenpulverdiffrakometrie der zuvor gemörserten Proben (XRD, Siemens, D5000) charakterisiert.

Ausgehend von einem gemeinsamen Sol von Zirkoniumdioxid-Nanopartikeln und Cerdioxid-Nanopartikeln und einer kugelförmigen Aktivkohle als Exotemplat wurden erfindungsgemäßes poröses Zirkonium/Cer-Mischoxid in Form von Partikeln hergestellt. Die rasterelektronmikroskopischen Aufnahmen der Exotemplatkugeln (vgl. Fig. 3A) und des Produkts (vgl. Fig. 3B) zeigen, dass auch das Endprodukt in Form von Kugeln erhalten wurde. Der überwiegende Teil der erhaltenen Kugeln (< 80 Masse-%) besitzt einen Durchmesser im Bereich von 0,2 bis 0,4 mm. Der geringere Durchmesser der Kugeln des Produkts gegenüber den eingesetzten Aktivkohlekugeln lässt sich auf eine Verdichtung der Phasen aufgrund von Kristallisationseffekten zurückführen, welche bei der Entfernung der Aktivkohle durch Abbrand stattfindet. Die mechanische Stabilität der erfindungsgemäßen Partikel ist auch deutlich höher als diejenige von Vergleichsprodukten, welche nach Imprägnierung der Aktivkohlekugeln mit einer Lösung der Metallsalze anstelle des Nanosols erhalten werden.

Die REM-Aufnahmen einer Bruchfläche der erhaltenen Produkte belegt, dass bei der Synthese nicht eine bloße Agglomeration von Nanopartikeln stattgefunden hat, sondern dass sich im Partikelinneren ein Cer/Zirkonium-Mischoxid-Netzwerk mit einem Porensystem gebildet hat, welches dem ursprünglichen Kohlenstoff-Exotemplat in seiner Gestalt ähnelt.

Auch die mittels Stickstoffsorption bestimmte spezifische Oberfläche belegt eine ausgeprägte Porosität der mit Exotemplat hergestellten erfindungsgemäßen Partikel (vgl. Tabelle 1). Dagegen resultiert in Abwesenheit des Exotemplats ein Produkt mit einer spezifischen Oberfläche von nur 5 m²/g (vgl. Tabelle 1). Auch gegenüber einem durch konventionelle Fällungssynthese hergestellten Produkt ist die spezifische Oberfläche des mit dem Aktivkohle-Exotemplat synthetisierten Produkts bedeutend höher; Entsprechendes gilt für die spezifischen Porenvolumina, welche ebenfalls in Tabelle 1 aufgeführt sind.

Die vorteilhafte Wirkung des Kohlenstoff-Exotemplats auf die Ausbildung eines offenen Porensystems äußert sich zudem in einem gegenüber den in Abwesenheit des Kohlenstoffs oder gegenüber den durch Fällung hergestellten Produkten wesentlich größeren mittleren Porendurchmesser (15,4 nm gegenüber 8,2 nm bzw. 5,9 nm, vgl. Tabelle 1). Dieser Porendurchmesser liegt auch deutlich über dem Porendurchmesser der eingesetzten Aktivkohlekugeln. Da die Aktivkohle zudem auch Mikroporen besitzt, kann das Porensystem der Produktkugeln nicht als direkter Negativabdruck des Aktivkohle-Porensystems aufgefasst werden.

Auch die Stickstoffsorptionsisotherme vom Typ IV mit einer charakteristischen Hysterese bei p/p₀ < 0,7 deutet auf ein hauptsächlich mesoporöses Material hin (vgl. Fig. 4, insbesondere linker Teil); die Verteilung der Porendurchmesser mit einem Maximum bei ca. 10 nm ist jedoch breit (vgl. Fig. 4, insbesondere rechter Teil).

Wie das Röntgenpulverdiffraktogramm ferner zeigt, liegt keine Phasentrennung zwischen CeO₂ und ZrO₂ vor. Zudem liegt das ZrO₂ vorwiegend als tetragonale Phase vor, während das CeO₂ überwiegend als kubische Phase vorliegt. Mit variierendem Gehalt an Cer und/oder Zirkonium variieren die Kristallphasen (vgl. Fig. 9 und 13). Diese Befunde entsprechen der zuvor erwähnten Stabilisierung einer thermodynamisch instabilen Phase bei der Kristallisation unter der räumlichen Einschränkung in den Poren der als Exotemplat eingesetzten Aktivkohle.

Wie zuvor beschrieben, kann ein zusätzliches Mesoporensystem erzeugt werden, indem dem Nanosol für die Imprägnierung der Aktivkohlekugeln zusätzlich ein Endotemplat auf der Basis des Triblockcopolymers Pluronic® der BASF zugegeben wird. Nach der Synthese in Gegenwart von Endo- und Exotemplat liegt wiederum kugelförmiges Mischoxid mit ähnlicher Partikelgrößenverteilung wie bei der Synthese mit Exotemplat allein vor. Gegenüber dem nur mit Exotemplat erhaltenen Material ist die Stickstoffsorptionskapazität deutlich erhöht (vgl. Fig. 5, insbesondere linker Teil). In der Porendurchmesserverteilung tritt ein zusätzliches Maximum bei circa 3 nm auf. Dies belegt die Bildung eines zusätzlichen Porensystems mit Abmessungen, welche nahezu eine Größenordnung geringer sind als diejenigen der Poren, welche aufgrund des Aktivkohle-Exotemplats erhalten werden. Ein Porensystem mit ähnlichem Maximum entsteht auch dann, wenn die Synthese nur in Gegenwart des Endotemplats durchgeführt wird (vgl. Fig. 5, insbesondere rechter Teil); allerdings resultiert dann auch eine wesentlich geringere spezifische Oberfläche (vgl. Tabelle 1). Zudem weitet sich die Durchmesserverteilung der auf das Aktivkohle-Exotemplat zurückzuführenden Poren zu größeren Werten hin auf, und ihr Maximum verschiebt sich von circa 10 nm in Abwesenheit des Endotemplats auf circa 20 nm in Anwesenheit beider Template (vgl. Fig. 5, insbesondere rechter Teil). Der zusätzliche Raumbedarf des Endotemplats bei der Kristallisation der Mischoxide in den Poren des Aktivkohle-Exotemplats könnte hierfür verantwortlich sein, ohne sich jedoch auf eine bestimmte Theorie oder Erklärung festlegen zu wollen.

Wie das Röntgenpulverdiffraktrogramm des Syntheseprodukts mit Endo- und Exotemplat zeigt (vgl. Fig. 12), wird ein größerer Anteil der monoklinen ZrO₂-Phase gebildet, als wenn nur das Endotemplat verwendet wird; offensichtlich verringert die Gegenwart des Endotemplats die stabilisierende Wirkung des Aktivkohle-Exotemplats auf die tetragonale Produktphase.

Um den Einfluss des Endotemplats auf die Bildung des zusätzlichen Porensystems besser zu verstehen, wurde sein Gehalt in dem zur Imprägnierung des Aktivkohle-Exotemplats verwendeten Nanosols variiert. Bei Anteilen bis zu n_{TBC}/n_{Metall} = 0,014 bleibt die Zugabe des Endotemplats praktisch ohne Einfluss auf die Porendurchmesserverteilung des Endprodukts (vgl. Fig. 6). Erst bei Anteilen n_{TBC}/n_{Metall} = 0,017 oder darüber hinaus tritt in der Porendurchmesserverteilung das zusätzliche Maximum bei ca. 3 nm auf (vgl. Fig. 6). Zudem nehmen dann die spezifische Oberfläche und das Porenvolumen merklich zu (vgl. Tabelle 1). Wird der Anteil des Endotemplats auf n_{TBC}/n_{Metall} = 0,027 erhöht, nimmt auch der Anteil des Mesoporensystems um 3 nm deutlich zu, und die Porendurchmesserverteilung der aufgrund des Exotemplats gebildeten Poren verschiebt sich zu kleineren Werten (vgl. Fig. 6). Eine mögliche Erklärung ist (ohne sich jedoch auf eine bestimmte Theorie festlegen zu wollen), dass das Endotemplat größere Anteile des Porensystems des Aktivkohle-Exotemplats einnimmt, welches für die Partikel des Nanosols dann nicht mehr zu Verfügung steht.

Als Schlussfolgerung lässt sich Folgendes feststellen: Durch Imprägnierung von kugelförmigen Aktivkohlepartikeln mit einem gemeinsamen Nanosol von Zirkoniumoxid und Ceroxid unter anschließender Entfernung der Aktivkohle durch Abbrand (Exotemplat-Synthese) kann erfindungsgemäßes hochporöses partikuläres Zirkonium/Cer-Mischoxidmaterial mit definierter Partikelmorphologie und hoher Kristallinität synthetisiert werden. Verwendet man bei der Synthese zusätzlich zu dem Aktivkohle-Exotemplat auch noch ein Endotemplat (z. B. Triblockcopolymer), wird ein hierarchisch strukturiertes Porensystem mit einer bimodalen Porendurchmesserverteilung mit Maxima um 3 nm bzw. 20 nm erhalten. Der Anteil des durch das Endotemplat hervorgerufenen Porensystems lässt sich durch die Menge des zugesetzten Endotemplats gezielt einstellen.

Die spezifische Oberfläche und das spezifische Porenvolumen der erfindungsgemäßen Produkte sind um ein Mehrfaches höher als für ein mittels konventioneller Fällung synthetisiertes Produkt.

Die Kombination von Exo- und Endotemplaten eröffnet die Möglichkeit, auch andere kristalline, aber auch amorphe Metalloxide und Metallmischoxide mit hierarchisch strukturiertem bimodalem Porensystem und zugleich definierter Partikelmorphologie gezielt und auf einfache Weise herzustellen.

**Tabelle 1**

| **Versuch** | **Produkteigenschaften** | | |
|---|---|---|---|
| | **BET-Oberfläche / m² g⁻¹** | **Gesamtporenvolumen V_{BJH} / cm³g⁻¹** | **Porendurchmesser D_{BJH} / nm** |
| Fällungssynthese (Stand der Technik) * | 68 | 0,11 | 5,9 |
| ohne Exo- oder Endotemplat (n.e.) * | 5 | < 0,01 | 8,2 |
| nur mit Endotemplat * (n_{TBC}/n_{Metalle} = 0,020) | 41 | 0,07 | 5,5 |
| | | | |
| nur mit Exotemplat | 104 | 0,42 | 15,4 |
| mit Exo- und Endotemplat (n_{TBC}/n_{Metalle} = 0,007) | 115 | 0,54 | 18,5 |
| mit Exo- und Endotemplat (n_{TBC}/n_{Metalle} = 0,014) | 120 | 0,56 | 22,4 |
| mit Exo- und Endotemplat (n_{TBC}/n_{Metalle} = 0,017) | 125 | 0,60 | 18,8 |
| mit Exo- und Endotemplat (n_{TBC}/n_{Metalle} = 0,020) | 137 | 0,70 | 20,7 |
| mit Exo- und Endotemplat (n_{TBC}/n_{Metalle} = 0,027) | 161 | 0,62 | 14,7 |

| | | | |
|---|---|---|---|
| 1) Die mit "*" gekennzeichnete Versuche sind nichterfindungsgemäße Versuche. 2) TBC = Triblockcopolymer | | | |

### Ausführungsbeispiel 2:

Um den Einfluss der Oberflächenmodifizierung des eingesetzten Exotemplats zu untersuchen, wurden verschiedene oberflächenmodifizierte Exotemplate hergestellt und mit unterschiedlichen Nanosolen auf Basis von Cerdioxid-Nanopartikeln und Zirkoniumdioxid-Nanopartikeln imprägniert.

Die Erzeugung polarer bzw. hydrophiler Exotemplatoberflächen erfolgte entweder mittels thermischer Oxidationsbehandlung in Gegenwart einer sauerstoffhaltigen Atmosphäre im Rahmen der Aktivierung bei der Herstellung der Aktivkohle oder aber durch chemische Oxidation der fertigen Aktivkohle mit einem geeigneten chemischen Oxidationsmittel (z. B. Salpetersäure oder Wasserstoffperoxid). Die auf diese Weise polar bzw. hydrophil eingestellten Exotemplate wurden mit wässrigem Nanosol auf Basis von Cerdioxid-Nanopartikeln und Zirkoniumdioxid-Nanopartikeln imprägniert. Die Versuchsdurchführung erfolgt gemäß Ausführungsbeispiel 1.

Die Erzeugung hydrophober Exotemplatoberflächen erfolgt mittels reduktiver Behandlung mit Wasserstoff. Die auf diese Weise hydrophob eingestellten Exotemplate wurden mit organischem Nanosol in n-Hexan auf Basis von Cerdioxid-Nanopartikeln und Zirkoniumdioxid-Nanopartikeln imprägniert. Die Versuchsdurchführung erfolgt gemäß Ausführungsbeispiel 1.

Die auf diese Weise erhaltenen Produkte zeigen im Vergleich zu Versuchen, bei denen nichtmodifiziertes Exotemplat eingesetzt wurde, eine weitergehend gesteigerte Leistungsfähigkeit, insbesondere im Hinblick auf eine weitergehende Verbesserung der BET-Oberfläche und des Gesamtporenvolumens. Auch die mechanischen sowie die katalytischen Eigenschaften sind gegenüber den Versuchen mit dem nichtmodifizierten Exotemplat verbessert.

Die Versuchsergebnisse sind in der nachfolgenden Tabelle 2 zusammengefasst.

**Tabelle 2**

| **Versuch** | **Produkteigenschaften** | | |
|---|---|---|---|
| | **BET -Oberfläche/ m² g⁻¹** | **Gesamtporenvolumen V_{BJH} / cm³g⁻¹** | **Porendurchmesser D_{BJH}/nm** |
| **Nicht vorbehandeltes Exotemplat** | | | |
| nur mit Exotemplat | 104 | 0,42 | 15,4 |
| mit Exo- und Endotemplat (n_{TBC}/n_{Metalle} = 0,020) | 137 | 0,70 | 20,7 |
| | | | |

| **Hydrophil/polar eingestelltes Exotemplat mittels thermischer Oxidationsbehandlung und wässriges Nanopartikelsol** | | | |
|---|---|---|---|
| nur mit Exotemplat | 145 | 0,73 | 16,0 |
| mit Exo- und Endotemplat (n_{TBC}/n_{Metalle} = 0,020) | 178 | 0,95 | 21,5 |
| | | | |

| **Hydrophil/polar eingestelltes Exotemplat mittels chemischer Oxidationsbehandlung mit HNO₃ oder H₂O₂ und wässriges Nanopartikelsol** | | | |
|---|---|---|---|
| nur mit Exotemplat | 149 | 0,74 | 15,9 |
| mit Exo- und Endotemplat (n_{TBC}/n_{Metalle} = 0,020) | 185 | 0,98 | 21,2 |
| | | | |

| **Hydrophob eingestelltes Exotemplat mittels reduktiver Behandlung mit H₂ und organisches Nanopartikelsol in n-Hexan** | | | |
|---|---|---|---|
| nur mit Exotemplat | 155 | 0,79 | 15,2 |
| mit Exo- und Endotemplat (n_{TBC}/n_{Metalle} = 0,020) | 190 | 0,99 | 20,1 |

### Ausführungsbeispiel 3:

In entsprechender Weise, wie für die Ausführungsbeispiele 1 und 2 beschrieben, wurde die Synthese von erfindungsgemäßen porösen Vanadiumoxid/Titanoxid-Mischoxidpartikeln mit variablen Gehalten an Vanadiumoxid und Titanoxid durchgeführt (vgl. Fig. 10 und 11).

Für die Synthese der erfindungsgemäßen porösen Vanadiumoxid/Titanoxid-Mischoxidpartikel wurde zunächst ein Sol von Vanadiumoxid-Nanopartikeln und Titanoxid-Nanopartikeln hergestellt. Die Versuchsdurchführung erfolgt entsprechend den Ausführungsbeispielen 1 und 2.

### Ausführungsbeispiel 4:

In entsprechender Weise, wie für die Ausführungsbeispiele 1 bis 3 beschrieben, wurden die Synthesen von erfindungsgemäßen porösen Mischoxidpartikeln der folgenden Kombinationen durchgeführt: Al₂O₃/SiO₂; Eisenoxid/Manganoxid; Kupferoxid/Manganoxid; MoO₃/Bi₂O₃; ZrO₂/Eisenoxid; ZrO₂/Manganoxid; ZrO₂/SiO₂; ZrO₂/TiO₂. Es wurden analoge Ergebnisse zu den Ausführungsbeispielen 1 bis 3 erhalten.

### Ausführungsbeispiel 5:

Die erfindungsgemäßen Mischoxidpartikel wurden für verschiedene katalytische Anwendungen getestet und lieferten dort ausgezeichnete Ergebnisse.

Insbesondere zeigten erfindungsgemäße Mischoxidpartikel auf Basis von CeO₂/ZrO₂ ausgezeichnete Ergebnisse bei der katalytischen Abgasbehandlung von Abgasen aus Verbrennungsmotoren, während erfindungsgemäße Mischoxidpartikel auf Basis von V₂O₅/TiO₂ ausgezeichnete Ergebnisse bei der katalytischen Entfernung von Stickoxiden aus industriellen Abgasen zeigten.

### Ausführungsbeispiel 6:

In einer weiteren Versuchsreihe mit einer entsprechenden Versuchsdurchführung wie in Ausführungsbeispiel 1 wurde der Einfluss der Eigenschaften des Exotemplats auf die resultierenden Endprodukte untersucht. Zu diesem Zweck wurden in den unterschiedlichen Versuchsansätzen verschiedene Aktivkohlen der Adsor-Tech GmbH, Premnitz, Deutschland, als Exotemplate eingesetzt. Die texturellen Eigenschaften der für die Templat-Synthese eingesetzten Aktivkohlekugeln sind in der nachfolgenden Tabelle 3 zusammengefasst.

**Tabelle 3**

| **Eingesetzte Aktivkohle (Exotemplat)** | **Exotemplat-Eigenschaften** | | | |
|---|---|---|---|---|
| | **BET / m² g⁻¹** | **Gesamtporenvolumen V_{Gurvich} / cm³ g⁻¹** | **Mittlerer Porendurchmesser / nm** | **Mikroporenvolumen/cm³ g⁻¹** |
| Nr. 1 | 1.439 | 0,7013 | 1,904 | 0,5741 |
| Nr. 2 | 1.938 | 1,2270 | 2,334 | 0,8333 |
| Nr. 3 | 1.560 | 1,1970 | 2,950 | 0,5910 |
| Nr. 4 | 1.748 | 1,9890 | 4,349 | 0,5475 |
| Nr. 5 | 1.663 | 2,4210 | 5,590 | 0,5327 |
| Nr. 6 | * | 3,2 | * | * |
| Nr. 7 | * | 2,5 | * | * |

| | | | | |
|---|---|---|---|---|
| * = keine Angabe des Herstellers | | | | |

Die texturellen Eigenschaften bzw. Daten der resultierenden partikulären porösen Materialien nach der vorliegenden Erfindung, welche mit den unterschiedlichen Aktivkohle-Exotemplaten hergestellt wurden, sind in der nachfolgenden Tabelle 4 zusammengefasst.

**Tabelle 4**

| **Produkt ausgehend von Exotemplat** | **Eigenschaften der Produkte** | | | |
|---|---|---|---|---|
| | **BET / m² g⁻¹** | **V_{BJH}/ cm³ g⁻¹** | **D_{BJH} / nm** | **SP-Oberfläche (p/p₀ = 0,25) / m² g⁻¹** |
| Nr. 1 | 128 | 0,4 | 17 | 127 |
| Nr. 2 | 160 | 0,4 | 12 | 159 |
| Nr. 3 | 187 | 0,5 | 24 | 185 |
| Nr. 4 | 105 | 0,5 | 14 | 102 |
| Nr. 5 | 191 | 0,6 | 17 | 188 |
| Nr. 6 | 134 | 0,4 | 24 | 133 |
| Nr. 7 | 193 | 0,4 | 12 | 190 |

### Ausführungsbeispiel 7:

Es wurden weitere Herstellungsbeispiele entsprechend den zuvor beschriebenen Beispielen durchgeführt, welche nachfolgend näher erläutert sind. Sofern nicht abweichend angegeben, kommen identische Ausgangsmaterialien zum Einsatz wie in den vorangehenden Beispielen.

### Zirkoniumdioxid (Synthese mit Zirconium(IV)-propylat); (nicht erfindungsgemäß)

Eine Mischung aus verschiedenen Volumenanteilen an Zirconium(IV)propylat (Aldrich, 70 Gew.-% in Propanol) und Cyclohexan (Fluka, 99,5%) von 100:0 und 50:50 wurde hergestellt. Kugelförmige Aktivkohle wurde mit diesen Mischungen trocken imprägniert, d. h. das hinzugefügte Volumen an Präkursorlösung entsprach dem Porenvolumen der eingesetzten Aktivkohlemasse. So wurden z. B. 5 g Aktivkohle mit einer Mischung von 5 ml Zirkonium(IV)-propylatlösung und 5 ml Cylcohexan imprägniert. Das Verfahren kann für Aktivkohlemassen im Bereich von 1 bis 20 g durchgeführt werden. Um die Hydrolyse des Zirkoniumpräkursors einzuleiten, wurde deionisiertes Wasser (0,2 ml g⁻¹ Aktivkohle) hinzugefügt. Der beladene Kohlenstoff wurde bei 383 K für 24 h getrocknet. Anschließend wurde das Material bei 873 K für 5 h calciniert (Aufheizrate: 2 K min⁻¹, 40 ml min⁻¹ Luftstrom).

### Zirconiumdioxid (Synthese mit Nanopartikel-Sol); (nicht erfindungsgemäß)

Die Synthese des Zirconiumdioxid-Sols wurde nach Deshpande et al. (A. S. Deshpande, N. Pinna, P. Beato, M. Antonietti, M. Niederberger, Chem. Mater. 16 (2004) 2599) durchgeführt. Eine Fällung von Nanopartikeln wurde dabei im sauren oder basischen Milieu nach der folgenden Vorschrift durchgeführt. Bei der Synthese wurde die eingesetzte Stoffmenge an Zirkonium zum spezifischen Porenvolumen der Aktivkohlen konstantgehalten (n_{Zr}/V_{AK} = 4,52 mmol g cm⁻³). Zur Herstellung des Nanopartikel-Sols wurde ZrOCl₂•8H₂O (Fluka, 99%) in deionisiertem Wasser gelöst. Für die Fällung im sauren Milieu wurde tropfenweise 1 N NaOH bis zum Erreichen von pH = 7 hinzugefügt. Eine Fällung unter basischen Bedingungen wurde mit tropfenweiser Zugabe von NH₃-Lösung (25 Gew.-% in Wasser) bis zu einem pH-Wert von 8,4 durchgeführt. Der Niederschlag wurde bei Raumtemperatur für 60 min gealtert und nachfolgend abfiltriert und mit deionisiertem Wasser gewaschen. Zum Filterkuchen wurde deionisiertes Wasser und HNO₃ (65 Gew.-%) hinzugefügt bis eine molare Zusammensetzung ZrO₂:HNO₃:H₂O von 1:0,4:1283 erreicht war. Nach einer Stunde im Ultraschallbad bildete sich ein milchiges Sol. Eine berechnete Masse an Aktivkohle im Bereich von 1 bis 10 g wurde mit dem Nanopartikel-Sol imprägniert und bei 333 K für 48 h in Luft getrocknet. Anschließend wurde das Material bei 873 K für 5 h calciniert (Aufheizrate: 2 K min⁻¹, 40 ml min⁻¹ Luftstrom).

### Zirkoniumdioxid (Synthese mit Nanopartikel-Sol und Triblockcopolymer); (nicht erfindungsgemäß)

Die Synthese des Nanopartikel-Sols wurde wie oben beschrieben durchgeführt. Zu dem Nanopartikel-Sol mit der molaren Zusammensetzung ZrO₂:HNO₃:H₂O von 1:0,4:1283 wurde das Triblockcopolymer (PEO-PPO-PEO) vom Typ Pluronic F77® (BASF) hinzugefügt. Das Stoffmengenverhältnis von Triblockcopolymer (TBC) zu Zirconium im Nanopartikel-Sol wurde zwischen 0 und 0,027 variiert. So wurden z. B. 1 bis 5 g Aktivkohle mit einem Nanopartikel-Sol mit einem Verhältnis von n_{TBC}/n_{Zr} = 0,20 imprägniert und bei 333 K für 48 h in Luft getrocknet. Anschließend wurde das Material bei 873 K für 5 h calciniert (Aufheizrate: 2 K min⁻¹, 40 ml min⁻¹ Luftstrom).

### Cerdioxid (Synthese mit Nanopartikel-Sol); (nicht erfindungsgemäß)

Bei der Synthese wurde die eingesetzte Stoffmenge an Cer zum spezifischen Porenvolumen der Aktivkohlen konstantgehalten (n_{Cer}/V_{AK} = 4,52 mmol g cm⁻³). Zur Herstellung des Nanopartikel-Sols wurde ein Cerpräkursor, wie Cer(III)nitrat-Hexahydrat (Aldrich, 99%) oder Cer(III)chlorid-Heptahydrat (Aldrich, >98%) in deionisiertem Wasser, typischerweise in Konzentrationen von 2 bis 6 mol l⁻¹, gelöst. Um das Metallhydroxid auszufällen, wurden unter Rühren tropfenweise 25 Gew.-% Ammoniaklösung zugegeben, bis ein pH-Wert zwischen 10 bis 11 erreicht war. Der Niederschlag wurde bei Raumtemperatur für 60 min gealtert. Anschließend wurde der erhaltene Niederschlag abfiltriert und gewaschen bis der pH-Wert des Waschwassers neutral war. Der erhaltene Filterkuchen wurde mit deionisiertem Wasser und HNO₃ (65 Gew.-% in H₂O) aufgeschlämmt, um eine molare Zusammensetzung CeO₂:HNO₃:H₂O von 1:0,5:1283 zu erhalten. Nach Behandlung im Ultraschallbad bildete sich nach zwei Stunden ein weißliches Sol. Anschließend wurde Aktivkohle (1 bis 10 g) mit dem Nanopartikel-Sol imprägniert und für zwei Tage bei 333 K an Luft getrocknet. Anschließend wurde das erhaltene Material bei 873 K für 5 h calciniert (Aufheizrate: 2 K min⁻¹, 40 ml min⁻¹ Luftstrom).

### Cer/Zirkonium-Mischoxide (Synthese mit Nanopartikel-Sol)

Ein CeₓZr₁₋ₓO₂ basiertes Nanopartikel-Sol mit Stoffmengenverhältnissen der Metallsalzpräkursoren Cer(III)nitrat-Hexahydrat (Aldrich, 99%) oder Cer(III)chlorid-Heptahydrat (Aldrich, >98%) und Zirkonium(IV)oxidchlorid-Octahydrat (Fluka, 99%) mit x = 0,1 bis 0,9 wurde nach Deshpande et al. hergestellt. Bei den Synthesen wurde die eingesetzte Stoffmenge an CeₓZr₁₋ₓO₂ zum spezifischen Porenvolumen der Aktivkohlen konstant gehalten (n_{Zr}/V_{AK} = 4,52 mmol g cm⁻³). Die entsprechenden Metallsalze wurden in deionisiertem Wasser gelöst. Um das Metallhydroxid auszufällen, wurden unter Rühren tropfenweise 25 Gew.-% Ammoniaklösung zugegeben, bis ein pH-Wert zwischen 10 bis 11 erreicht war. Der Niederschlag wurde bei Raumtemperatur für 60 min gealtert. Anschließend wurde der erhaltene Niederschlag abfiltriert und mit deionisiertem Wasser gewaschen. Der erhaltene Filterkuchen wurde mit deionisiertem Wasser und HNO₃ (65 Gew.-% in H₂O) aufgeschlämmt, um eine molare Zusammensetzung CeₓZr₁₋ₓO₂:HNO₃:H₂O von 1:0,5:1283 zu erhalten. Nach Behandlung im Ultraschallbad bildete sich nach zwei Stunden ein weißliches Sol. Anschließend wurde Aktivkohle (1 bis 10 g) mit dem Nanopartikel-Sol imprägniert und für zwei Tage bei 333 K an Luft getrocknet. Anschließend wurde das erhaltene Material bei 873 K für 5 h calciniert (Aufheizrate: 2 K min⁻¹, 40 ml min⁻¹ Luftstrom).

### Vanadiumpentoxidsynthese (Synthese mit Metallisopropylaten); (nicht erfindungsgemäß)

Aktivkohlekugeln (1 bis 5 g) wurden mit VO(OⁱPr)₃ (Alfa Aesar, 96%; 1,99 ml pro 1 g Aktivkohle) trocken imprägniert. Diese Mischung wurde für einen Tag gealtert, um in Anwesenheit von Luftfeuchtigkeit zu kondensieren. Dann wurde das Produkt bei 383 K an Luft getrocknet und anschließend 5 h bei 873 K calciniert (Aufheizrate 2 K min⁻¹, 40 ml min⁻¹ Luftstrom).

### Vanadium/Titan-Mischoxide (Synthese mit Metallisopropylaten)

Ti(OⁱPr)₄ (Aldrich, 97%) und VO(OⁱPr)₃ (Alfa Aesar, 96%) wurden in verschiedenen Stoffmengenverhältnissen (n_{Ti}/n_{V} = 99/1, 95/5, 90/10, 80/20) miteinander vermischt. Im Anschluss wurden Aktivkohlekugeln (1 bis 5 g) damit trocken imprägniert (1,99 ml pro 1 g Aktivkohle). Die erhaltenen Materialien wurden einen Tag gealtert, um in Anwesenheit von Luftfeuchtigkeit zu kondensieren. Nachfolgend wurde das Produkt bei 383 K an Luft getrocknet und anschließend 5 h bei 873 K calciniert (Aufheizrate 2 K min⁻¹, 40 ml min⁻¹ Luftstrom).

### Titandioxid (Synthese mit Metallisopropylaten); (nicht erfindungsgemäß)

Aktivkohle (1 bis 10 g) wurde mit Ti(OⁱPr)₄ (Aldrich, 97%) trocken imprägniert. Zu der beladenen Aktivkohle wurde deionisiertes Wasser (0,2 ml g⁻¹ Aktivkohle) hinzugefügt, um die Hydrolyse einzuleiten. Das Produkt wurde bei 383 K an Luft getrocknet und anschließend bei 873 K für 5 h calciniert (Aufheizrate 2 K min⁻¹, 40 ml min⁻¹ Luftstrom).

### Titandioxid (Synthese mit Nanopartikel-Sol); (nicht erfindungsgemäß)

Bei den Synthesen wurde die eingesetzte Stoffmenge an Titan zum spezifischen Porenvolumen der Aktivkohlen konstantgehalten (n_{Ti}/V_{AK} = 4,52 mmol g cm⁻³). Titan(IV)tetrachlorid (Fluka, 98%) wurde bei Raumtemperatur tropfenweise zu Ethanol (Merck, 99,8%) hinzugefügt (η_{Ti}/V_{EtOH} = 0,425 mol L⁻¹). Die Reaktion führte zur Bildung von HCl- und Cl₂-Gasen. Es entstand eine gelbliche klare Lösung, welche weitere 30 min bei Raumtemperatur gealtert wurde. Mit dem so erhaltenen Nanopartikel-Sol wurde kugelförmige Aktivkohle (1 bis 10 g) imprägniert und bei 333 K für 48 h an Luft getrocknet. Anschließend wurde die beladene Aktivkohle bei 873 K für 5 h calciniert (Aufheizrate: 2 K min⁻¹, 40 ml min⁻¹ Luftstrom).

### Ausführungsbeispiel 8:

Im Folgenden werden die Experimente zur selektiven katalytischen Reduktion (SCR) von Stickoxiden (NO) mit Kohlenwasserstoffen (Propen) als Reduktionsmittel beschrieben. Zur Durchführung der katalytischen Experimente wurde eine Strömungsapparatur mit einem Festbettreaktor aus Quarzglas genutzt. Der Strömungsreaktor wurde mit einem Gemisch aus 200 mg Korund und 200 mg Katalysator mit einer Kornfraktion von 100 bis 300 µm befüllt. Die Schüttung wurde im Reaktor mit Quarzwolle (Merck, > 98%) fixiert. Das Reaktionsgas bestand aus C₃H₆ (Air Liquide, in He, > 99,99 Vol.-%), NO (Messer, in He, > 99,99 Vol.-%), O₂ (Linde, 99,999 Vol.-%), und He (Air Liquide, > 99,99 Vol.-%). Dabei diente He als Trägergas. Der Gesamtvolumenstrom betrug 100 cm³ min⁻¹. Sämtliche Experimente wurden bei Umgebungsdruck durchgeführt.

Die modifizierte Verweilzeit W/F beträgt in den hier durchgeführten katalytischen Experimenten 0,12 g s cm⁻³. Dabei entspricht W der eingesetzten Katalysatormasse und F dem Gesamtvolumenstrom des gasförmigen Reaktandenstroms. Als Detektor kam ein nichtdispersiver Infrarotanalysator (Typ URAS 10 E, Firma *Hartmann & Braun*) zum Einsatz. Damit konnten im Reaktionsgas CO₂, C₃H₆, NO und N₂O detektiert werden. Dem Detektor wurde ein Konverter (Typ CGK-O, Firma *Hartmann & Braun*) vorgeschalten, da NO₂ vom Analysator nicht detektiert werden kann. Die Regelung der Anlage und die Datenaufzeichnung erfolgten durch einen Rechner mit angeschlossener Steuereinheit (Software WorkBench PC 2.1.0, Firma Strawberry Tree). Es wurden dabei konstante Heiz- und Abkühlraten angenommen.

Die jeweilige Katalysatorprobe wird in einem Heliumstrom (100 cm³ min⁻¹) mit einer Heizrate von 10 K min⁻¹ auf 400 °C erhitzt und 1 h bei dieser Temperatur aktiviert. Nach Abkühlung auf 200 °C innerhalb von 75 min beginnt das Temperaturstufenprofil. Mit Beginn des Stufenprofils wird das Reaktionsgasgemisch über den Katalysator geleitet. Die Temperaturschritte betragen jeweils 50 °C bei einer Heizrate von 10 K min⁻¹. Die Temperaturplateaus bei 200, 250, 300 und 350 °C werden jeweils 2 h und bei 400, 450, 500, 550 und 600 °C jeweils 1 h bis zur Einstellung eines stationären Zustandes gehalten. Abschließend wird im Heliumstrom mit einer Strömungsgeschwindigkeit von 60 cm³ min⁻¹ auf 60 °C abgekühlt.

Die Analytik erfolgte mittels nichtdispersiver Infrarot-Analyse. Das Messverfahren des URAS 10 E beruht auf der Eigenschaft heteroatomiger Gase, infrarote Strahlung im Wellenbereich 1 = 2 bis 8 mm zu absorbieren. Zwischen der gemessenen Absorption und der Konzentration der Messkomponente besteht nach Lambert-Beer ein exponentieller Zusammenhang. Die Verarbeitungselektronik liefert ein lineares Gleichstromsignal, welches von der Steuereinheit, dem PC, in Form einer ASCII-Datei gespeichert wird. Die Auswertung erfolgt mit dem Analysenprogramm Origin.

Es wurde ein handelsüblicher Vergleichskatalysator auf Basis von geträgertem TiO₂ untersucht; dieser untersuchte Katalysator (d. h. nur TiO₂ auf Träger) zeigt für die HC-SCR unter den verwendeten Bedingungen keine Aktivität: Der erreichte Umsatz an NO ist auf das zugefügte Korund zurückzuführen. Vergleichbare Ergebnisse werden auch für einen handelsüblichem Vergleichskatalysator auf Basis von geträgertem V₂O₅ (d. h. nur V₂O₅ auf Träger) erhalten.

Im Vergleich dazu zeigt das erfindungsgemäße Katalysatorsystem auf Basis von V₂O₅-TiO₂ ausgezeichnete Umsätze; der Umsatz von NO nimmt mit steigenden Temperaturen stetig zu, was vor allem auf die Bildung von N₂O zurückzuführen ist. Das erfindungsgemäße Katalysatorsystem auf Basis von V₂O₅-TiO₂ verfügt auch über eine hohe Selektivität zur Bildung von N₂O von über 80 %.

## Patentansprüche

1. Verfahren zur Herstellung von partikulären porösen Materialien auf Basis von metallischen Mischoxiden mindestens zweier voneinander verschiedener Metalle mittels Templatverfahren,
**dadurch gekennzeichnet,**
(a) **dass** zunächst in einem ersten Verfahrensschritt Nanopartikel von Metalloxiden mindestens zweier voneinander verschiedener Metalle in die Poren eines porösen dreidimensionalen Matrixmaterials ("Exotemplat") eingebracht werden, wobei die Nanopartikel Teilchengrößen im Bereich von 0,1 nm bis 2.000 nm aufweisen und wobei als poröses dreidimensionales Matrixmaterial partikelförmige Aktivkohle eingesetzt wird, wobei das Matrixmaterial an seiner Oberfläche modifiziert wird, wobei die Oberflächenmodifizierung durch oxidative oder reduktive Behandlung des Matrixmaterials erfolgt; und
(b) **dass** nachfolgend in einem zweiten Verfahrensschritt das mit den Nanopartikeln beladene Matrixmaterial einer thermischen Behandlung zu Zwecken einer zumindest partiellen, vorzugsweise zu Zwecken einer zumindest im Wesentlichen vollständigen Entfernung des Matrixmaterials unterzogen wird.

2. Verfahren nach Anspruch 1, **dadurch gekennzeichnet,**
**dass** die Nanopartikel in Form einer Dispersion oder einer kolloidalen Lösung, insbesondere in Form eines Sols, in die Poren des Matrixmaterials eingebracht werden, insbesondere wobei die Dispersion oder kolloidale Lösung wässrig basiert oder organisch basiert, vorzugsweise wässrig basiert, ausgebildet ist; und/oder
**dass** die Einbringung der Nanopartikel in die Poren des Matrixmaterials mittels Imprägnieren des Matrixmaterials mit einer die Nanopartikel enthaltenden Dispersion oder kolloidalen Lösung, insbesondere einem Sol, erfolgt; und/oder
**dass** die Nanopartikel, insbesondere die Dispersionen oder kolloidalen Lösungen, vorzugsweise Sole, der Nanopartikel mittels Fällung erhalten werden, insbesondere ausgehend von Lösungen oder Dispersionen von Salzen oder anderen Vorläufersubstanzen, insbesondere Alkoxiden, der betreffenden Metalle; insbesondere wobei sich dem Verfahrensschritt der Einbringung der die Nanopartikel enthaltenden Dispersion oder kolloidalen Lösung, insbesondere des Sols, in die Poren des Matrixmaterials noch vor Durchführung der thermischen Behandlung gemäß Verfahrensschritt (b) zunächst ein Verfahrensschritt der Trocknung anschließt.

3. Verfahren nach einem der vorangehenden Ansprüche, **dadurch gekennzeichnet,**
**dass** die Teilchengrößen der Nanopartikel kleiner als die Durchmesser der Poren des Matrixmaterials sind und/oder dass das Verhältnis der Durchmesser der Poren des Matrixmaterials zu den Teilchengrößen der Nanopartikel > 1 : 1, insbesondere mindestens 1,25 : 1, vorzugsweise mindestens 1,5 : 1, bevorzugt mindestens 1,75 : 1, besonders bevorzugt mindestens 2, ganz besonders bevorzugt mindestens 5, noch mehr bevorzugt mindestens 10, noch weiter bevorzugt mindestens 20, noch weiter bevorzugt mindestens 50, beträgt; und/oder
**dass** die Nanopartikel Teilchengrößen im Bereich von 0,5 nm bis 1.000 nm, vorzugsweise 0,75 nm bis 750 nm, besonders bevorzugt 1 nm bis 500 nm, ganz besonders bevorzugt 1 nm bis 250 nm, aufweisen und/oder dass die Nanopartikel mittlere Teilchengrößen (D50) im Bereich von 0,1 nm bis 500 nm, insbesondere 0,2 nm bis 100 nm, vorzugsweise 0,5 nm bis 50 nm, besonders bevorzugt 1 nm bis 25 nm, noch mehr bevorzugt 2 bis 100 nm, aufweisen.

4. Verfahren nach einem der vorangehenden Ansprüche, **dadurch gekennzeichnet,**
**dass** das Einbringen der Nanopartikel in die Poren des Matrixmaterials in Gegenwart von und/oder zusammen mit mindestens einem Endotemplat erfolgt;
insbesondere wobei das Endotemplat bei der thermischen Behandlung gemäß Verfahrensschritt (b) zumindest partiell, vorzugsweise zumindest im Wesentlichen vollständig, entfernt wird; und/oder
insbesondere wobei das Endotemplat ausgewählt ist aus der Gruppe von organischen Polymeren und Copolymeren, insbesondere Blockcopolymeren, organischen Tensiden, mizellenbildenden Verbindungen und Ammoniumsalzen, insbesondere quarternären oder diquarternären Ammoniumsalzen, sowie deren Mischungen und Kombinationen; und/oder
insbesondere wobei das Endotemplat Bestandteil einer die Nanopartikel enthaltenden Dispersion oder kolloidalen Lösung, insbesondere eines Sols, ist; und/oder insbesondere wobei das Endotemplat in einem molaren Verhältnis n_{Endotemplat}/n_{Metalle,} berechnet als Molverhältnis von eingesetztem Endotemplat zu eingesetzten Metallen der Metalloxide, im Bereich von 0,005 bis 0,2, insbesondere 0,01 bis 0,1, vorzugsweise 0,015 bis 0,08, eingesetzt wird.

5. Verfahren nach einem der vorangehenden Ansprüche, **dadurch gekennzeichnet,**
**dass** das Matrixmaterial mittlere Partikelgrößen (D50), insbesondere mittlere Teilchendurchmesser (D50), im Bereich von 0,01 bis 1 mm, insbesondere 0,05 bis 0,8 mm, bevorzugt 0,1 bis 0,6 mm, vorzugsweise 0,15 bis 0,5 mm, besonders bevorzugt 0,2 bis 0,4 mm, aufweist; und/oder
**dass** das Matrixmaterial ein Gesamtporenvolumen, insbesondere ein Gesamtporenvolumen nach Gurvich, im Bereich von 0,4 bis 4 cm³/g, insbesondere 0,5 bis 3,5 cm³/g, vorzugsweise 0,6 bis 3 cm³/g, besonders bevorzugt 0,7 bis 2,5 cm³/g, aufweist und/oder dass 50 % bis 99 %, insbesondere 60 % bis 99 %, vorzugsweise 70 % bis 95 %, des Gesamtporenvolumens, insbesondere des Gesamtporenvolumens nach Gurvich, des Matrixmaterials durch Poren mit Porendurchmessern von < 500 nm, insbesondere < 250 nm, vorzugsweise < 100 nm, gebildet sind; und/oder
**dass** das Matrixmaterial ein durch Poren mit Porendurchmessern ≤ 20 Å gebildetes Porenvolumen, insbesondere Mikroporenvolumen nach Carbon Black, im Bereich von 0,1 bis 2 cm³/g, insbesondere 0,2 bis 1,5 cm³/g, vorzugsweise 0,3 bis 1,1 cm/g,³ besonders bevorzugt 0,4 bis 1 cm³/g, aufweist und/oder dass 20 % bis 95 %, insbesondere 30 % bis 95 %, vorzugsweise 40 % bis 90 %, des Gesamtporenvolumens des Matrixmaterials durch Poren mit Porendurchmessern von ≤ 20 A (Mikroporen) gebildet sind; und/oder
**dass** das Matrixmaterial einen mittleren Porendurchmesser im Bereich von 1 bis 150 Å, insbesondere 1 bis 100 Å, bevorzugt 1,5 bis 75 Å, besonders bevorzugt 1,5 bis 50 Å, aufweist; und/oder
**dass** das Matrixmaterial eine spezifische BET-Oberfläche im Bereich von 500 m²/g bis 3.500 m²/g, insbesondere 600 bis 2.500 m²/g, vorzugsweise 700 bis 2.000 m²/g, besonders bevorzugt 800 bis 1.800 m²/g, aufweist.

6. Verfahren nach einem der vorangehenden Ansprüche, **dadurch gekennzeichnet,**
**dass** das Matrixmaterial an seiner Oberfläche mit polaren Gruppen ausgerüstet und/oder modifiziert ist und/oder dass das Matrixmaterial an seiner Oberfläche hydrophil oder hydrophob ausgerüstet ist, insbesondere mit hydrophilen oder hydrophoben Gruppen modifiziert ist,
insbesondere wobei die polare und/oder hydrophile Ausrüstung des Matrixmaterials durch oxidative thermische Behandlung, insbesondere bei der Herstellung des Matrixmaterials, insbesondere im Rahmen der Aktivierungsbehandlung, erfolgt, insbesondere durch thermische Behandlung in Gegenwart oxidierender Gase, vorzugsweise Sauerstoff, und/oder insbesondere wobei die polare und/oder hydrophile Ausrüstung des Matrixmaterials durch oxidative chemische Behandlung erfolgt, insbesondere durch Behandlung und/oder Reaktion des Matrixmaterials mit mindestens einem Oxidationsmittel, vorzugsweise ausgewählt aus Salpetersäure, Peroxiden und Persäuren sowie deren Mischungen oder Kombinationen; und/oder
insbesondere wobei die unpolare und/oder hydrophobe Ausrüstung des Matrixmaterials durch reduktive Behandlung des Matrixmaterials, insbesondere durch reduktive Behandlung in Gegenwart mindestens eines Reduktionsmittels, vorzugsweise Wasserstoff, erfolgt.

7. Verfahren nach einem der vorangehenden Ansprüche, **dadurch gekennzeichnet,**
**dass** die thermische Behandlung gemäß dem zweiten Verfahrensschritt (b) unter oxidativen Bedingungen, insbesondere in Gegenwart von Sauerstoff, durchgeführt wird und/oder
**dass** die thermische Behandlung gemäß dem zweiten Verfahrensschritt (b) zu einer zumindest partiellen, vorzugsweise zu einer zumindest im Wesentlichen vollständigen Entfernung des Matrixmaterials mittels Abbrand oder Pyrolyse führt und/oder
**dass** im Rahmen der thermischen Behandlung gemäß dem zweiten Verfahrensschritt (b) eine Kalzinierung der Metallmischoxide und/oder ein zumindest partieller, vorzugsweise ein zumindest im Wesentlichen vollständiger Abbrand oder Pyrolyse des Matrixmaterials erfolgt und/oder
**dass** die thermische Behandlung gemäß dem zweiten Verfahrensschritt (b) bei Temperaturen im Bereich von 300 bis 1.500 °C, insbesondere 400 bis 1.200 °C, vorzugsweise 500 bis 1.000 °C, besonders bevorzugt 550 bis 800 °C, und/oder über eine Dauer von 1 bis 20 Stunden, insbesondere 2 bis 15 Stunden, vorzugsweise 3 bis 10 Stunden, und/oder in Gegenwart einer sauerstoffhaltigen Atmosphäre durchgeführt wird.

8. Verfahren nach einem der vorangehenden Ansprüche, **dadurch gekennzeichnet,**
**dass** die Metalle der Mischoxide ausgewählt sind aus Metallen der Haupt- und Nebengruppen des Periodensystems der Elemente und den Lanthanoiden, bevorzugt aus der Gruppe von AI, Bi, Ce, Cu, Fe, Mn, Mo, Si, Ti, V, Zr, Co, Cr, Ni, Zn, Mg, Ca und B, besonders bevorzugt aus der Gruppe von Al, Bi, Ce, Cu, Fe, Mn, Mo, Si, Ti, V und Zr, und/oder
**dass** die Mischoxide der Metalle ausgewählt sind aus den folgenden Kombinationen: Al₂O₃/SiO₂; Eisenoxid/Manganoxid; Kupferoxid/Manganoxid; MoO₃/Bi₂O₃; TiO₂N₂O₅; ZrO₂/Lanthanoidoxid, insbesondere ZrO₂/CeO₂; ZrO₂/Eisenoxid; ZrO₂/Manganoxid; ZrO₂/SiO₂; ZrO₂/TiO₂; und/oder
**dass** Größenverhältnis der Partikel des eingesetzten Matrixmaterials zu den Partikeln der erhaltenen partikulären porösen Materialien im Bereich zwischen 1,1 : 1 bis 50 : 1, insbesondere 1,2 : 1 bis 20 : 1, vorzugsweise 1,4 : 1 bis 10:1, besonders bevorzugt 1,5 : 1 bis 5 : 1, liegt.

9. Partikuläre poröse Materialien auf Basis von metallischen Mischoxiden mindestens zweier voneinander verschiedener Metalle in Form von diskreten Partikeln, erhältlich gemäß einem Verfahren nach einem der vorangehenden Ansprüche, wobei die Metalle der Mischoxide ausgewählt sind aus der Gruppe von Al, Bi, Ce, Cu, Fe, Mn, Mo, Si, Ti, V und Zr.

10. Partikuläre poröse Materialien nach Anspruch 9, **dadurch gekennzeichnet,**
**dass** die partikulären porösen Materialien selbsttragend ausgebildet sind; und/oder
**dass** die partikulären porösen Materialien in Form von kornförmigen, insbesondere kugelförmigen, diskreten Partikeln ausgebildet sind; und/oder
**dass** die partikulären porösen Materialien mittlere Partikelgrößen (D50), insbesondere mittlere Teilchendurchmesser (D50), im Bereich von 0,01 bis 0,8 mm, insbesondere 0,05 bis 0,7 mm, bevorzugt 0,1 bis 0,6 mm, aufweisen.

11. Partikuläre poröse Materialien nach einem der vorangehenden Ansprüche, **dadurch gekennzeichnet,**
**dass** die partikulären porösen Materialien einen mittleren Porendurchmesser, insbesondere nach BJH, im Bereich von 1 bis 35 Å, insbesondere 1 bis 30 Å, bevorzugt 1,5 bis 30 Å, besonders bevorzugt 2 bis 25 Å, aufweisen; und/oder
**dass** die partikulären porösen Materialien eine spezifische BET-Oberfläche im Bereich von 10 m²/g bis 1.000 m²/g, insbesondere 15 bis 900 m²/g, vorzugsweise 20 bis 500 m²/g, besonders bevorzugt 25 bis 300 m²/g, aufweisen; und/oder
**dass** die partikulären porösen Materialien ein hierarchisch strukturiertes Porensystem aufweisen und/oder dass die partikulären porösen Materialien eine bimodale oder multimodale Porendurchmesserverteilung aufweisen, insbesondere wobei die partikulären porösen Materialien mindestens ein erstes und zweites Porensystem aufweisen, deren Verteilungsmaxima der Porendurchmesser um mindestens 5 nm, insbesondere um mindestens 10 nm, differieren, insbesondere bezogen auf das Diagramm "Differentielles Porenvolumen (dV/dD)/Porendurchmesser (D)".

12. Partikuläre poröse Materialien nach einem der vorangehenden Ansprüche, **dadurch gekennzeichnet,**
**dass** die partikulären porösen Materialien zumindest teilkristallin, insbesondere zumindest im Wesentlichen vollständig kristallin, ausgebildet sind, insbesondere wobei die partikulären porösen Materialien einen Kristallinitätsgrad von mindestens 25 %, insbesondere mindestens 30 %, vorzugsweise mindestens 40 %, besonders bevorzugt mindestens 50 %, ganz besonders bevorzugt mindestens 60 % und mehr, aufweisen; und/oder
**dass** die Mischoxide der Metalle ausgewählt sind aus den folgenden Kombinationen: Al₂O₃/SiO₂; Eisenoxid/Manganoxid; Kupferoxid/Manganoxid; MoO₃/Bi₂O₃; TiO₂/V₂O₅; ZrO₂/Lanthanoidoxid, insbesondere ZrO₂/CeO₂; ZrO₂/Eisenoxid; ZrO₂/Manganoxid; ZrO₂/SiO₂; ZrO₂/TiO₂; und/oder
**dass** die Masseverhältnisse der mindestens zwei voneinander verschiedenen Metalle der metallischen Mischoxide im Bereich von 1 : 99 bis 99 : 1, insbesondere 5 : 95 bis 95 : 5, vorzugsweise 10 : 90 bis 90 : 10, variieren.

13. Verwendung von partikulären porösen Materialien gemäß einem der vorangehenden Ansprüche als Katalysatoren oder Katalysatorträger, insbesondere für die katalytische Behandlung von Abgasen aus Verbrennungsprozessen, zur katalytischen Entfernung von Stickoxiden aus Abgasen von Verbrennungsprozessen, zur Katalyse chemischer Prozesse und Reaktionen oder zur Photokatalyse.

14. Verwendung von partikulären porösen Materialien gemäß einem der vorangehenden Ansprüche in oder als Gassensoren oder in Brennstoffzellen.

15. Verwendung von partikulären porösen Materialien gemäß einem der vorangehenden Ansprüche für sorptive, insbesondere adsorptive Anwendungen, insbesondere als vorzugsweise reaktives Adsorbens.

## Claims

1. A method for the production of particulate, porous materials on the basis of mixed metal oxides of at least two mutually different metals by means of a template method,
**characterised in that**
(a) initially in a first method step nanoparticles of metal oxides of at least two mutually different metals are introduced into the pores of a porous, three-dimensional matrix material ("exotemplate"), wherein the nanoparticles have particle sizes within the range of 0.1 nm to 2,000 nm and wherein particulate activated carbon is used as the porous, three-dimensional matrix material, wherein the matrix material is modified on the surface thereof, wherein the surface modification occurs by means of oxidative or reductive treatment of the matrix material; and
(b) **in that** then in a second method step the matrix material laden with the nanoparticles is subjected to thermal treatment for the purposes of at least partial, preferably for the purposes of at least substantially complete, removal of the matrix material.

2. The method according to claim 1, **characterised in that**
the nanoparticles are introduced into the pores of the matrix material in the form of a dispersion or a colloidal solution, in particular in the form of a sol, in particular wherein the dispersion or colloidal solution is water-based or organic-based, preferably water-based; and/or
**in that** the introduction of the nanoparticles into the pores of the matrix material occurs by means of impregnation of the matrix material with a dispersion or colloidal solution containing the nanoparticles, in particular with a sol; and/or
**in that** the nanoparticles, in particular the dispersions or colloidal solutions, preferably sols, of the nanoparticles are obtained by means of precipitation, in particular on the basis of solutions or dispersions of salts or other precursors, in particular alkoxides, of the relevant metals; in particular wherein initially a method step for drying follows the method step of introducing the nanoparticle-containing dispersion or colloidal solution, in particular the sol, into the pores of the matrix material before the thermal treatment is carried out according to method step (b).

3. The method according to one of the preceding claims, **characterised in that**
the particle sizes of the nanoparticles are smaller than the diameters of the pores of the matrix material and/or **in that** the ratio of the diameters of the pores of the matrix material to the particle sizes of the nanoparticles is > 1: 1, in particular at least 1.25: 1, preferably at least 1.5: 1, more preferably at least 1.75: 1, in particular preferably at least 2, very in particular preferably at least 5, even more preferably at least 10, further even more preferably at least 20, further even more preferably at least 50; and/or
**in that** the nanoparticles have particle sizes within the range of 0.5 nm to 1.000 nm, preferably 0.75 nm to 750 nm, in particular preferably 1 nm to 500 nm, very in particular preferably 1 nm to 250 nm and/or that the nanoparticles have mean particle sizes (D50) within the range of 0.1 nm to 500 nm, in particular 0.2 nm to 100 nm, preferably 0.5 nm to 50 nm, in particular preferably 1 nm to 25 nm, even more preferably 2 nm to 100 nm.

4. The method according to one of the preceding claims, **characterised in that**
the introduction of nanoparticles into the pores of the matrix material occurs in the presence of and/or together with at least one endotemplate;
in particular wherein the endotemplate is at least partially, preferably at least substantially completely, removed during the thermal treatment according to method step (b); and/or
in particular wherein the endotemplate is selected from the group of organic polymers and copolymers, in particular block copolymers, organic surfactants, micelle-forming compounds and ammonium salts, in particular quaternary or diquaternary ammonium salts, and mixtures and combinations thereof; and/or
in particular wherein the endotemplate is a component of a nanoparticle-containing dispersion or colloidal solution, in particular a sol; and/or
in particular wherein the endotemplate is used in a molar ratio n_{endotemplate}/nₘₑₜₐₗₛ, calculated as the molar ratio of used endotemplate to used metals of metal oxides, within the range of 0.005 to 0.2, in particular 0.01 to 0.1, preferably 0.015 to 0.08.

5. The method according to one of the preceding claims, **characterised in that**
the matrix material has mean particle sizes (D50), in particular mean particle diameters (D50) within the range of 0.01 mm to 1 mm, in particular 0.05 mm to 0.8 mm, preferably 0.1 mm to 0.6 mm, more preferably 0.15 mm to 0.5 mm, in particular preferably 0.2 mm to 0.4 mm; and/or
**in that** the matrix material has a total pore volume, in particular preferably a total pore volume according to Gurvich, within the range of 0.4 to 4 cm³/g, in particular 0.5 to 3.5 cm³/g, preferably 0.6 to 3 cm³/g, in particular preferably 0.7 to 2.5 cm³/g, and/or **in that** 50% to 99%, in particular 60% to 99%, preferably 70% to 95% of the total pore volume, in particular the total pore volume according to Gurvich, of the matrix material are formed by pores having pore diameters of < 500 nm, in particular < 250 nm, preferably < 100 nm; and/or
**in that** the matrix material has a pore volume formed by pores having pore diameters ≤ 20 Å, in particular micro-pore volumes according to carbon black, within the range of 0.1 to 2 cm³/g, in particular 0.2 to 1.5 cm³/g, preferably 0.3 to 1.1 cm³/g, in particular preferably 0.4 to 1 cm³/g and/or **in that** 20% to 95%, in particular 30 % to 95 %, preferably 40 % to 90 %, of the total pore volume of the matrix material are formed by pores having pore diameters of ≤ 20 Å (micro-pores); and/or
**in that** the matrix material has a mean pore diameter within the range of 1 to 150 Å, in particular 1 to 100 Å, preferably 1.5 to 75 Å, in particular preferably 1.5 to 50 Å; and/or
**in that** the matrix material has a specific BET surface within the range of 500 m²/g to 3,500 m²/g, in particular 600 to 2,500 m²/g, preferably 700 to 2,000 m²/g, in particular preferably 800 to 1,800 m²/g.

6. The method according to one of the preceding claims, **characterised in that**
the matrix material on the surface thereof is equipped and/or modified with polar groups and/or **in that** the matrix material on the surface thereof is equipped in a hydrophilic or hydrophobic manner, in particular is modified with hydrophilic or hydrophobic groups,
in particular wherein the polar and/or hydrophilic equipping of the matrix material occurs by means of oxidative thermal treatment, in particular during the manufacture of the matrix material, in particular as part of the activation treatment, in particular by means of thermal treatment in the presence of oxidising gases, preferably oxygen, and/or in particular wherein the polar and/or hydrophilic equipping of the matrix material occurs by means of oxidative chemical treatment, in particular by treatment and/or reaction of the matrix material with at least one oxidizing agent, preferably selected from nitric acid, peroxides and peracids and mixtures or combinations thereof; and/or
in particular wherein the non-polar and/or hydrophobic equipping of the matrix material occurs by means of reductive treatment of the matrix material, in particular by means of reductive treatment in the presence of at least one reducing agent, preferably hydrogen.

7. The method according to one of the preceding claims, **characterised in that**
the thermal treatment according to the second method step (b) is carried out under oxidative conditions, in particular in the presence of oxygen, and/or
**in that** the thermal treatment according to the second method step (b) leads to an at least partial, preferably to an at least substantially complete, removal of the matrix material by means of combustion or pyrolysis and/or
**in that** as part of the thermal treatment according to the second method step (b) a calcination of the mixed metal oxides and/or an at least partial, preferably an at least substantially complete combustion or pyrolysis of the matrix material occurs and/or
**in that** the thermal treatment according to the second method step (b) is carried out at temperatures within the range of 300 to 1,500 °C, in particular 400 to 1,200 °C, preferably 500 to 1,000 °C, in particular preferably 550 to 800 °C, and/or over a period of 1 to 20 hours, in particular 2 to 15 hours, preferably 3 to 10 hours, and/or in the presence of an oxygen-containing atmosphere.

8. The method according to one of the preceding claims, **characterised in that**
the metals of the mixed oxides are selected from metals of the main groups and subgroups of the periodic table of elements and lanthanides, preferably from the group of Al, Bi, Ce, Cu, Fe, Mn, Mo, Si, Ti, V, Zr, Co, Cr, Ni, Zn, Mg, Ca and B, in particular preferably from the group of Al, Bi, Ce, Cu, Fe, Mn, Mo, Si, Ti, V and Zr, and/or
**in that** the mixed oxides of metals are selected from the following combinations: Al₂O₃/SiO₂; iron oxide/manganese oxide; copper oxide/manganese oxide; MoO₃/Bi₂O₃; TiO₂/V₂O₅; ZrO₂/lanthanide oxide, in particular ZrO₂/CeO₂; ZrO₂/iron oxide; ZrO₂/manganese oxide; ZrO₂/SiO₂; ZrO₂/TiO₂; and/or
**in that** the size ratio of the particles of the used matrix material to the particles of the obtained particulate, porous materials is within the range between 1.1: 1 to 50: 1, in particular 1.2: 1 to 20: 1, preferably 1.4: 1 to 10: 1, in particular preferably 1.5: 1 to 5: 1.

9. Particulate, porous materials based on mixed metal oxides of at least two mutually different metals in the form of discrete particles, obtainable according to a method according to one of the preceding claims, wherein the metals of the mixed oxides are selected from the group of Al, Bi, Ce, Cu, Fe, Mn, Mo, Si, Ti, V and Zr.

10. The particulate, porous material according to claim 9, **characterised in that**
the particulate, porous materials are formed to be self-supporting; and/or
**in that** the particulate, porous materials are designed in the form of granular, in particular ball-shaped, discrete particles; and/or
**in that** the particulate, porous materials have mean particle sizes (D50), in particular mean particle diameters (D50) within the range of 0.01 mm to 0.8 mm, in particular 0.05 mm to 0.7 mm, preferably 0.1 mm to 0.6 mm.

11. The particulate, porous materials according to one of the preceding claims, **characterised in that**
the particulate, porous materials have a mean pore diameter, in particular according to BJH, within the range of 1 to 35 Å, in particular 1 to 30 Å, preferably 1.5 to 30 Å, in particular preferably 2 to 25 Å; and/or
**in that** the particulate, porous materials have a specific BET surface within the range of 10 m²/g to 1,000 m²/g, in particular 15 to 900 m²/g, preferably 20 to 500 m²/g, in particular preferably 25 to 300 m²/g; and/or
**in that** the particulate, porous materials have a hierarchically structured pore system and/or **in that** the particulate, porous materials have a bimodal or multimodal pore diameter distribution, in particular wherein the particulate, porous materials have at least a first pore system and a second pore system, the distribution maximums of which differ by at least 5 nm, in particular by at least 10 nm, in particular in relation to the "Differential Pore Volume (dV/dD)/Pore Diameter (D)" diagram.

12. The particulate, porous materials according to one of the preceding claims, **characterised in that**
the particulate, porous materials are designed to be at least partly crystalline, in particular at least substantially completely crystalline, in particular wherein the particulate, porous materials have a degree of crystallinity of at least 25%, in particular at least 30%, preferably at least 40%, in particular preferably at least 50%, very in particular preferably at least 60% and more; and/or
**in that** the mixed oxides of metals are selected from the following combinations: Al₂O₃/SiO₂; iron oxide/manganese oxide; copper oxide/manganese oxide; MoO₃/Bi₂O₃; TiO₂/V₂O₅; ZrO₂/lanthanide oxide, in particular ZrO₂/CeO₂; ZrO₂/iron oxide; ZrO₂/manganese oxide; ZrO₂/SiO₂; ZrO₂/TiO₂; and/or
**in that** the mass ratios of the at least two mutually different metals of the mixed metal oxides vary within the range of 1: 99 to 99: 1, in particular 5: 95 to 95: 5, preferably 10: 90 to 90: 10.

13. A use of particulate, porous materials according to one of the preceding claims as catalysts or catalyst carriers, in particular for the catalytic treatment of exhaust gases from combustion processing, for catalytic removal of nitric oxides from exhaust gases of combustion processes, for the catalysis of chemical processes and reactions or for photocatalysis.

14. The use of particulate, porous materials according to one of the preceding claims in or as gas sensors or in fuel cells.

15. The use of particulate, porous materials according to one of the preceding claims for sorptive, in particular adsorptive applications, in particular as preferably reactive adsorbents.

## Revendications

1. Procédé de fabrication de matériaux poreux particulaires à base d'oxydes métalliques mixtes d'au moins deux métaux différents l'un de l'autre selon le procédé de templating,
**caractérisé en ce que**
(a) d'abord dans une première étape de procédé les nanoparticules d'oxydes métalliques d'au moins deux métaux différents l'un de l'autre sont introduits dans les pores d'un matériau matriciel (« exotemplate ») poreux tridimensionnel, les nanoparticules présentant une granulométrie dans la plage comprise entre 0,1 nm et 2000 nm et du charbon actif particulaire étant utilisé comme matériau matriciel poreux tridimensionnel, le matériau matriciel étant modifié sur sa surface, la modification de surface s'effectuant par traitement oxydatif ou réducteur du matériau matriciel ; et
(b) **en ce qu'**ensuite dans une seconde étape de procédé le matériau matriciel chargé de nanoparticules est soumis à un traitement thermique servant à éliminer au moins partiellement, de préférence sensiblement totalement, le matériau matriciel.

2. Procédé selon la revendication 1, caractérisé en ce
les nanoparticules sous forme d'une dispersion ou d'une solution colloïdale, en particulier sous forme d'un sol, sont introduites dans les pores du matériau matriciel, en particulier la dispersion ou la solution colloïdale étant conçue sous forme de base aqueuse ou organique, de préférence de base aqueuse ; et/ou
en ce que l'introduction des nanoparticules dans les pores du matériau matriciel s'effectue par imprégnation du matériau matriciel par une dispersion ou une solution colloïdale , en particulier un sol, contenant les nanoparticules ; et/ou
en ce que les nanoparticules, en particulier les dispersions ou les solutions colloïdales, de préférence les sols, des nanoparticules sont obtenues par précipitation, en particulier en partant de solutions ou de dispersions de sels ou d'autres précurseurs, en particulier des alcoxydes, des métaux concernés ; en particulier l'étape de procédé d'introduction de la dispersion ou de la solution colloïdale, en particulier du sol, contenant les nanoparticules dans les pores du matériau matriciel encore avant la mise en oeuvre du traitement thermique selon l'étape de procédé (b) étant d'abord suivie d'une étape de procédé de séchage.

3. Procédé selon une des revendications précédentes, **caractérisé en ce que**
la granulométrie des nanoparticules est inférieure au diamètre des pores du matériau matriciel et/ou **en ce que** le rapport entre le diamètre des pores du matériau matriciel et la granulométrie des nanoparticules est > 1 : 1, en particulier au moins 1,25 : 1, de préférence au moins 1,5 : 1, de préférence au moins 1,75 : 1, de préférence encore au moins 2, mieux encore au moins 5, encore davantage de préférence au moins 10, mieux encore au moins 20, idéalement au moins 50 ; et/ou
**en ce que** les nanoparticules présentent une granulométrie dans la plage comprise entre 0,5 nm et 1000 nm, de préférence comprise entre 0,75 nm et 750 nm, de préférence encore entre 1 nm et 500 nm, mieux encore entre 1 nm et 250 nm, et/ou **en ce que** les nanoparticules présentent une granulométrie moyenne (D50) dans la plage comprise entre 0,1 nm et 500 nm, en particulier entre 0,2 nm et 100 nm, de préférence entre 0,5 nm et 50 nm, de préférence encore entre 1 nm et 25 nm, idéalement entre 2 et 100 nm.

4. Procédé selon une des revendications précédentes, **caractérisé en ce que**
l'introduction des nanoparticules dans les pores du matériau matriciel s'effectue en présence d'au moins un endo-template et/ou conjointement à celui-ci ;
en particulier l'endo-template étant éliminé au moins partiellement, de préférence au moins sensiblement totalement, par le traitement thermique selon l'étape de procédé (b) ; et/ou
en particulier l'endo-template étant sélectionné dans le groupe des polymères et copolymères organiques, en particulier des copolymères à blocs, des tensioactifs organiques, des composés formant des micelles et des sels d'ammonium, en particulier des sels d'ammonium quaternaire ou diquaternaire, ainsi que leurs mélanges et combinaisons ; et/ou
en particulier l'endo-template étant un constituant d'une dispersion ou d'une solution colloïdale, en particulier d'un sol, contenant les nanoparticules ; et/ou
en particulier l'endo-template étant utilisé dans un rapport molaire n_{Endotemplat}/n_{Metalle}, calculé par le rapport molaire entre l'endo-template utilisé et les métaux utilisés des oxydes métalliques, dans la plage comprise entre 0,005 et 0,2, en particulier entre 0,01 et 0,1, de préférence entre 0,015 et 0,08.

5. Procédé selon une des revendications précédentes, **caractérisé en ce que**
le matériau matriciel présente une granulométrie moyenne (D50), en particulier un diamètre moyen des particules (D50), dans la plage comprise entre 0,01 et 1 mm, en particulier entre 0,05 et 0,8 mm, de préférence entre 0,1 et 0,6 mm, préférentiellement entre 0,15 et 0,5 mm, de manière particulièrement préférée entre 0,2 et 0,4 mm ; et/ou **en ce que** le matériau matriciel comprend un volume poreux total, en particulier un volume poreux total selon Gurvich, dans la plage comprise entre 0,4 et 4 cm³/g, en particulier entre 0,5 et 3,5 cm³/g, de préférence entre 0,6 et 3 cm³/g, mieux encore entre 0,7 et 2,5 cm³/g, et/ou **en ce qu'**entre 50 % et 99 %, en particulier entre 60 % et 99 %, de préférence entre 70 % et 95 %, du volume poreux total, en particulier du volume poreux total selon Gurvich, du matériau matriciel sont formés par les pores ayant un diamètre de pore < 500 nm, en particulier < 250 nm, de préférence < 100 nm ; et/ou
**en ce que** le matériau matriciel comprend un volume poreux, en particulier un volume microporeux formé par des pores ayant un diamètre ≤ 20 Å, en particulier un volume microporeux par la méthode au noir de carbone, dans la plage comprise entre 0,1 et 2 cm³/g, en particulier entre 0,2 et 1,5 cm³/g, de préférence entre 0,3 et 1,1 cm³/g, mieux encore entre 0,4 et 1 cm³/g, et/ou **en ce qu'**entre 20 % et 95 %, en particulier entre 30 % et 95 %, de préférence entre 40 % et 90 %, du volume poreux total du matériau matriciel sont formés par des pores ayant un diamètre ≤ 20 Å (micropores) ; et/ou
**en ce que** le matériau matriciel présente un diamètre moyen des pores dans la plage de 1 à 150 Å, en particulier de 1 à 100 Å, préférablement de 1,5 à 75 Å, de manière particulièrement préférée de 1,5 à 50 Å ; et/ou
**en ce que** le matériau matriciel présente une aire spécifique BET dans la plage comprise entre 500 m²/g et 3,500 m²/g, en particulier entre 600 et 2 500 m²/g, de préférence entre 700 et 2 000 m²/g, de préférence encore entre 800 et 1 800 m²/g.

6. Procédé selon une des revendications précédentes, **caractérisé en ce que**
le matériau matriciel est sur sa surface modifié et/ou est apprêté par des groupes polaires et/ou **en ce que** le matériau matriciel est sur sa surface doté d'un apprêt hydrophile ou hydrophobe, en particulier est modifié par des groupes hydrophiles ou hydrophobes,
en particulier l'apprêt polaire et/ou hydrophile du matériau matriciel s'effectue par traitement thermique oxydatif, en particulier lors de la fabrication du matériau matriciel, en particulier dans le cadre du traitement d'activation, en particulier par traitement thermique en présence de gaz oxydants, de préférence l'oxygène, et/ou en particulier l'apprêt polaire et/ou hydrophile du matériau matriciel s'effectue par traitement chimique oxydatif, en particulier par traitement et/ou par réaction du matériau matriciel avec au moins un agent oxydant, de préférence sélectionné parmi l'acide nitrique, les peroxydes et les peracides ainsi que leurs mélanges ou combinaisons ; et/ou
en particulier l'apprêt non polaire et/ou hydrophobe du matériau matriciel s'effectue par traitement réducteur du matériau matriciel, en particulier par traitement réducteur en présence d'au moins un agent réducteur, de préférence hydrogène.

7. Procédé selon une des revendications précédentes, **caractérisé en ce que**
le traitement thermique est effectué selon la seconde étape de procédé (b) dans des conditions oxydatives, en particulier en présence d'oxygène ; et/ou
**en ce que** le traitement thermique selon la seconde étape de procédé (b) provoque une élimination au moins partielle, de préférence au moins sensiblement totale du matériau matriciel par grillage ou par pyrolyse et/ou
**en ce que** dans le cadre du traitement thermique selon la seconde étape de procédé (b) on procède à une calcination des oxydes métalliques mixtes et/ou à un grillage ou une pyrolyse au moins partiel, de préférence au moins sensiblement total, du matériau matriciel et/ou
**en ce que** le traitement thermique selon la seconde étape de procédé (b) est réalisé à des températures dans la plage comprise entre 300 et 1 500 °C, en particulier entre 400 et 1 200 °C, de préférence entre 500 et 1 000 °C, mieux encore entre 550 et 800 °C, et/ou sur une durée de 1 à 20 heures, de préférence de 2 à 15 heures, de préférence de 3 à 10 heures, et/ou en présence d'une atmosphère oxygénée.

8. Procédé selon une des revendications précédentes, **caractérisé en ce que**
les métaux des oxydes mixtes sont sélectionnés parmi les métaux des groupes principaux et secondaires du tableau périodique des éléments et les lanthanides, de préférence provenant du groupe Al, Bi, Ce, Cu, Fe, Mn, Mo, Si, Ti, V, Zr, Co, Cr, Ni, Zn, Mg, Ca et B, mieux encore du groupe Al, Bi, Ce, Cu, Fe, Mn, Mo, Si, Ti, V et Zr, et/ou
**en ce que** les oxydes mixtes des métaux sont sélectionnés parmi les combinaisons suivantes : Al₂O₃/SiO₂ ; oxyde de fer /oxyde de manganèse ; oxyde de cuivre/oxyde de manganèse ; MoO₃/Bi₂O₃ ; TiO₂/V₂O₅ ; ZrO₂/oxyde de lanthanide, en particulier ZrO₂/CeO₂ ; ZrO₂/oxyde de fer ; ZrO₂/oxyde de manganèse ; ZrO₂/SiO₂ ; ZrO₂/TiO₂ ; et/ou
**en ce que** le rapport entre la granulométrie des particules du matériau matriciel utilisé et celle des particules des matériaux poreux particulaires obtenus se situe dans la plage entre 1,1 : 1 à 50 : 1, en particulier 1,2 : 1 à 20 : 1, de préférence 1,4 : 1 à 10 : 1, préférablement 1,5 : 1 à 5 : 1.

9. Matériaux poreux particulaires à base d'oxydes métalliques mixtes d'au moins deux métaux différents l'un de l'autre sous la forme de particules discrètes, pouvant être obtenus par un procédé selon l'une quelconque des revendications précédentes, les métaux des oxydes mixtes étant sélectionnés dans le groupe Al, Bi, Ce, Cu, Fe, Mn, Mo, Si, Ti, V et Zr.

10. Matériaux poreux particulaires selon la revendication 9, **caractérisés**
**en ce que** les matériaux poreux particulaires sont conçus comme auto-porteurs ; et/ou
**en ce que** les matériaux poreux particulaires sont conçus sous la forme de particules discrètes granulaires, en particulier sphériques ; et/ou
**en ce que** les matériaux poreux particulaires présentent une granulométrie moyenne (D50), en particulier un diamètre moyen de particule (D50), dans la plage comprise entre 0,01 et 0,8 mm, en particulier entre 0,05 et 0,7 mm, de préférence entre 0,1 et 0,6 mm.

11. Matériaux poreux particulaires selon l'une quelconque des revendications précédentes, **caractérisés en ce que**
les matériaux poreux particulaires présentent un diamètre moyen des pores, en particulier par la méthode BJH, dans la plage comprise entre 1 et 35 Å, en particulier entre 1 et 30 Å, préférablement entre 1,5 et 30 Å, de manière particulièrement préférée entre 2 et 25 Å ; et/ou
**en ce que** les matériaux poreux matriciels présentent une aire spécifique BET dans la plage comprise entre 10 m²/g et 1 000 m²/g, en particulier entre 15 et 900 m²/g, de préférence entre 20 et 500 m²/g, de préférence encore entre 25 et 300 m²/g ; et/ou
**en ce que** les matériaux poreux particulaires présentent un système poreux à structure hiérarchique et/ou **en ce que** les matériaux poreux particulaires présentent une répartition du diamètre des pores multimodale ou bimodale, en particulier les matériaux poreux particulaires présentant au moins un premier et un second système poreux, dont les valeurs maximum de répartition du diamètre des pores diffèrent d'au moins 5 nm, en particulier d'au moins 10 nm, en particulier rapporté au diagramme « volumes différentiel des pores (dV/dD)/ diamètre des pores (D) ».

12. Matériaux poreux particulaires selon l'une quelconque des revendications précédentes, **caractérisés en ce que**
les matériaux poreux particulaires sont conçus au moins comme partiellement cristallins, en particulier au moins sensiblement comme entièrement cristallin, en particulier les matériaux poreux particulaires présentant un taux de cristallinité d'au moins 25 %, en particulier au moins 30 %, de préférence au moins 40 %, mieux encore au moins 50 %, idéalement au moins 60 % et plus ; et/ou
**en ce que** les oxydes mixtes des métaux sont sélectionnés parmi les combinaisons suivantes : Al₂O₃/SiO₂ ; oxyde de fer /oxyde de manganèse ; oxyde de cuivre/oxyde de manganèse ; MoO₃/Bi₂O₃ ; TiO₂/V₂O₅ ; ZrO₂/oxyde de lanthanide, en particulier ZrO₂/CeO₂ ; ZrO₂/oxyde de fer; ZrO₂/oxyde de manganèse ; ZrO₂/SiO₂ ; ZrO₂/TiO₂ ; et/ou
**en ce que** les rapports massiques des au moins deux métaux différents l'un de l'autre des oxydes métalliques mixtes varient dans la plage 1 : 99 à 99 : 1, en particulier 5 : 95 à 95 : 5, de préférence 10 : 90 à 90 : 10.

13. Utilisation de matériaux poreux particulaires selon l'une quelconque des revendications précédentes comme catalyseurs ou supports de catalyseur, en particulier pour le traitement catalytique des gaz d'échappement provenant des processus de combustion, destinés à l'élimination catalytique des oxydes d'azote des gaz d'échappement des processus de combustion, à la catalyse de processus et réactions chimiques ou à la photocatalyse.

14. Utilisation de matériaux poreux particulaires selon l'une quelconque des revendications précédentes dans des détecteurs de gaz ou comme détecturs de gaz ou dans des piles à combustible.

15. Utilisation de matériaux poreux particulaires selon l'une quelconque des revendications précédentes pour des applications sorbantes, en particulier adsorbantes, en particulier comme des adsorbants de préférence réactifs.
